# EUROPÄISCHE PATENTSCHRIFT

(11) **EP 3 227 122 B1**
(45) Veröffentlichungstag und Bekanntmachung des Hinweises auf die Patenterteilung: **08.04.2020**
(21) Anmeldenummer: 15813711.7
(22) Anmeldetag: 02.12.2015
(51) Int. Cl.: B42D 25/364, B42D 25/378, B42D 25/324, B42D 25/328, B42D 25/351, B42D 25/391, B42D 25/405

(54) **SICHERHEITSELEMENT**
SECURITY ELEMENT
ÉLÉMENT DE SÉCURITÉ

(30) Priorität: 04.12.2014 DE 102014117877
(43) Veröffentlichungstag der Anmeldung: 11.10.2017
(73) Patentinhaber: Leonhard Kurz Stiftung & Co. KG, 90763 Fürth (DE); OVD Kinegram AG, 6300 Zug (CH)
(72) Erfinder: TOMPKIN, Wayne Robert, 5400 Baden (CH); WALTER, Harald, 8810 Horgen (CH); STAHL, Rainer, 90449 Nürnberg (DE); SPIESS, Rouven, 6415 Arth (CH); STAUB, René, 6332 Hagendorn (CH)
(74) Vertreter: Louis Pöhlau Lohrentz
(86) Internationale Anmeldenummer: PCT/EP2015/078279
(87) Internationale Veröffentlichungsnummer: WO 2016/087485

(56) Entgegenhaltungen:
- EP-A2- 0 803 525
- WO-A1-2007/003405
- WO-A1-2008/083921
- WO-A1-2008/110316
- WO-A1-2013/004541
- US-A1- 2012 038 852

## Beschreibung

Die Erfindung betrifft ein Sicherheitselement, ein Sicherheitsdokument mit mindestens einem Sicherheitselement, eine Transferfolie mit mindestens einem Sicherheitselement sowie ein Verfahren zur Herstellung eines Sicherheitselements.

Optisch wirksame Sicherheitselemente werden insbesondere auf Sicherheitsdokumenten wie etwa Banknoten, Pässen, Ausweisen, Scheckkarten, Kreditkarten, Visa oder Zertifikaten sowohl für informative als auch für dekorative Zwecke eingesetzt. Derartige Sicherheitselemente erhöhen einerseits den Fälschungsschutz beispielsweise gegenüber modernen Farbkopierern und anderen Reproduktionssystemen und sind andererseits für den Laien leicht und eindeutig erkennbar, sodass der Laie die Echtheit eines mit einem derartigen Sicherheitselement ausgestatteten Sicherheitsdokuments eindeutig bestimmen kann und somit Fälschungen oder Manipulationen erkennen kann.

Zu diesem Zweck können Sicherheitselemente Licht beugende, diffraktive Strukturen wie beispielsweise Hologramme aufweisen. Diese Sicherheitselemente bieten dem Betrachter beispielsweise bei Verkippen des Sicherheitselementes einprägsame optisch variable Effekte. Auch werden als Sicherheitselemente optisch variable Dünnfilmschichtelemente eingesetzt, die einem Betrachter unter unterschiedlichen Betrachtungswinkeln, beispielsweise einen unterschiedlichen Farbeindruck vermitteln. Jedoch finden sich derartige Sicherheitselemente heute auf einer Vielzahl von Sicherheitsdokumenten, wie beispielsweise Banknoten, sodass der Laie diese im alltäglichen Gebrauch kaum beachtet, wodurch Fälschungen oder Manipulationen insbesondere durch Laien weniger häufig erkannt werden.

Aus der WO 2008/110316 A1 ist beispielsweise eine polarisationsselektive Sicherheitseinrichtung umfassend eine gedruckte, gemusterte, doppelbrechende Matrix aus LCP-Polymer bekannt.

Die WO 2013/004541 A1 offenbart einen mehrschichtigen Folienkörper zur Kennzeichnung eines Sicherheitsdokuments.

Die WO 2007/003405 A1 betrifft einen Mehrschichtkörper mit elektrisch steuerbaren, optisch wirksamen Schichtsystemen.

Die US 2012/0038852 A1 offenbart eine reflektierende Anzeigevorrichtung mit einer Schicht aus polymerdispergiertem Flüssigkristall (PDLC).

Die WO 2008/083921 A1 betrifft ein Dokument mit einem optischen Sender. Die EP 0 803 525 A2 offenbart ein chirales anisotropes wärmehärtbares Harz. Der Erfindung liegt nun die Aufgabenstellung zugrunde, ein optisch variables Sicherheitselement mit einem verbesserten optischen Erscheinungsbild bereit zu stellen.

Diese Aufgabe wird durch ein Sicherheitselement zur Kennzeichnung eines Sicherheitsdokuments, insbesondere einer Banknote oder eines ID-Dokuments, gemäß Anspruch 1 gelöst.

Diese Aufgabe wird weiter gelöst durch ein in Anspruch 13 definiertes Sicherheitsdokument, insbesondere eine Banknote oder ein ID-Dokument, mit mindestens einem Sicherheitselement nach einem der Ansprüche 1 bis 12. Diese Aufgabe wird auch gelöst durch eine in Anspruch 14 definierte Transferfolie mit mindestens einem Sicherheitselement nach einem der Ansprüche 1 bis 12, wobei das mindestens eine Sicherheitselement auf einer Trägerfolie der Transferfolie ablösbar angeordnet ist. Auch ist es möglich, dass das Sicherheitselement in eine Laminierfolie integriert ist. Weiter wird diese Aufgabe durch ein Verfahren zur Herstellung eines Sicherheitselements gemäß Anspruch 15 gelöst.

Hierbei hat sich gezeigt, dass der Kontrast zwischen einem opakeren und/oder farbigen Zustand der in ihrer optischen Wirkung elektrisch veränderbaren Schicht und einem transparenteren und/oder farbschwächeren Zustand der in ihrer optischen Wirkung elektrisch veränderbaren Schicht, insbesondere unter ungünstigen Lichtverhältnissen, durch ein solches Sicherheitselement verbessert wird. Hierdurch ist es möglich, den Fälschungsschutz bzw. die Erkennungsrate insbesondere für Laien eines mit einem derartigen Sicherheitselement ausgestatten Sicherheitsdokument zu erhöhen. Durch diese Kontrastverbesserung wird die Erkennungsrate für Laien insbesondere unter ungünstigen Lichtverhältnissen erhöht. Eine derartige Kontrastverbesserung wird erreicht, ohne die Schichtdicke der in ihrer optischen Wirkung elektrisch veränderbaren Schicht zu erhöhen. Hierdurch kann ein derartiges Sicherheitselement auf Sicherheitsdokumenten mit geringer Dicke, wie beispielsweise Banknoten, eingesetzt werden, ohne dass der Gesamteindruck, die Einsetzbarkeit oder Haltbarkeit des Sicherheitsdokuments durch das Sicherheitselement wesentlich beeinflusst werden. Im Weiteren kann ein derartiges Sicherheitselement flexibel ausgebildet werden, so dass das Sicherheitselement beispielsweise kostengünstig als Folienkörper in einem Rolle-zu-Rolle-Prozess hergestellt werden kann. Die Kontrastverbesserung wird durch die Flüssigkristallmoleküle in Kombination mit den stäbchenförmigen Farbstoffmolekülen oder durch die Flüssigkristalle, die gleichzeitig als Farbstoffmoleküle wirken, erreicht, wobei die stäbchenförmigen Farbstoffmoleküle oder die gleichzeitig als Farbstoffmoleküle wirkenden Flüssigkristalle unterschiedliche Absorptionskoeffizienten für elektromagnetische Strahlung, insbesondere im Wellenlängenbereich von 380 nm bis 780 nm und bevorzugt zwischen 430 nm und 690 nm, für unterschiedliche Molekülachsen aufweisen.

Vorzugsweise weist die mindestens eine in ihrer optischen Wirkung veränderbare Schicht unterschiedliche stäbchenförmige Farbstoffmoleküle sowie unterschiedliche gleichzeitig als Farbstoffmoleküle wirkende Flüssigkristalle, welche unterschiedliche Absorptionsspektren aufweisen und insbesondere bei verschiedenen Wellenlängen ihr Absorptionsmaximum haben, auf. Diese unterscheiden sich somit in der Farbigkeit, die sie für das menschliche Auge erzeugen.

Da die Längsachsen der stäbchenförmigen Farbstoffmolekühle in Abhängigkeit von den Ausrichtungen der Längsachsen der räumlich benachbarten in dem elektrischen Feld ausrichtbaren Flüssigkristalle veränderbar sind, wird einfallendes Licht je nach Ausrichtung der Flüssigkristallmoleküle und somit in Abhängigkeit der Ausrichtung der stäbchenförmigen Farbstoffmoleküle durch die stäbchenförmigen Farbstoffmoleküle absorbiert. Die stäbchenförmigen Farbstoffmoleküle können so zusätzlich zu den Effekten, welche durch die Flüssigkristalle hervorgerufen werden, einfallendes Licht absorbieren. Durch die stäbchenförmigen Farbstoffmoleküle wird neben der Kontrastverbesserung erreicht, dass ein Wechsel zwischen einem opakeren, farbigen Zustand der in ihrer optischen Wirkung elektrisch veränderbaren Schicht und einem transparenteren Zustand der in ihrer optischen Wirkung elektrisch veränderbaren Schicht stattfindet.

Die als Farbstoffmoleküle wirkenden Flüssigkristalle sind wie Flüssigkristalle in einem elektrischen Feld ausrichtbar und wirken gleichzeitig als Farbstoffmoleküle, so dass je nach Ausrichtung der gleichzeitig als Farbstoffmoleküle wirkenden Flüssigkristalle in dem elektrischen Feld bestimmte Wellenlängen von einfallendem Licht unterschiedlich stark absorbiert werden, da die gleichzeitig als Farbstoffmoleküle wirkenden Flüssigkristalle unterschiedliche Absorptionskoeffizienten für unterschiedliche Molekülachsen aufweisen. Durch die gleichzeitig als Farbstoffmoleküle wirkenden Flüssigkristalle wird ein Wechsel zwischen einem opakeren, farbigen Zustand der in ihrer optischen Wirkung elektrisch veränderbaren Schicht und einem transparteren Zustand der in ihrer optischen Wirkung elektrisch veränderbaren Schicht erreicht.

Der Wechsel in der Intensität der Farbe entsteht hierbei durch die unterschiedlichen Absorptionskoeffizienten für unterschiedliche Molekülachsen der stäbchenförmigen Farbstoffmoleküle und/oder der gleichzeitig als Farbstoffmoleküle wirkenden Flüssigkristalle, da je nach verwendeten stäbchenförmigen Farbstoffmolekülen und/oder gleichzeitig als Farbstoffmoleküle wirkenden Flüssigkristallen und deren Ausrichtung zu dem einfallenden Licht bestimmte Wellenlängen stärker absorbiert werden. Hierdurch wird die Fälschungssicherheit insbesondere gegenüber Laien weiter erhöht, da derartige Wechsel zwischen einem opakeren, farbigen Zustand und einem transparenteren Zustand für Laien sehr gut einprägsam sind und daher einen hohen Wiedererkennungswert haben. Dieser Wechsel zwischen einem opakeren, farbigen Zustand und einem transparenteren, farbschwächeren Zustand wird durch die Flüssigkristalle und die stäbchenförmigen Farbstoffmoleküle und/oder die gleichzeitig als Farbstoffmoleküle wirkenden Flüssigkristalle erreicht, so dass für diesen Wechsel keine weiteren Schichten notwendig sind. Hierdurch wird die geringe Schichtdicke der in ihrer optischen Wirkung elektrisch veränderbaren Schicht bei gleichzeitigem Wechsel zwischen einem opakeren, farbigen Zustand und einem transparenteren, farbschwächeren Zustand erhalten.

Des Weiteren ist es auch möglich, verschiedene stäbchenförmige Farbstoffmoleküle insbesondere mit Absorptionsmaxima in unterschiedlichen Wellenlängenbereichen miteinander zu mischen. Hierdurch kann durch Anpassung des jeweiligen Mischungsverhältnisses auch eine andere Farbigkeit als die der reinen stäbchenförmigen Farbstoffmoleküle eingestellt werden.

Weiter ist es auch möglich, einen oder mehrere Typen von stäbchenförmigen Farbstoffmolekülen mit einem oder mehreren konventionellen Farbstoffen, die sich nicht an den Molekülachsen der Flüssigkristalle ausrichten, zu mischen. Dadurch kann zum Beispiel im opaken Zustand der in ihrer optischen Wirkung elektrisch veränderbaren Schicht eine Mischfarbe A eingestellt werden, die sich aus den Absorptionsspektren der jeweiligen stäbchenförmigen sowie der konventionellen Farbstoffmoleküle ergibt. Beim Umschalten in den transparenteren Zustand der in ihrer optischen Wirkung elektrisch veränderbaren Schicht ändert sich nur die Ausrichtung der stäbchenförmigen Farbstoffmoleküle und damit deren Absorptionskoeffizient bei einer bestimmten Wellenlänge. Das Absorptionsspektrum der konventionellen Farbstoffmoleküle wird dabei nicht beeinflusst, so dass sich dadurch eine neue, von Farbe A verschiedene Farbe B ergibt. Diese Farbe B wird von der Farbigkeit der konventionellen Farbstoffmoleküle dominiert.

Bei dem opakeren, farbigen Zustand der in ihrer optischen Wirkung elektrisch veränderbare Schicht ist diese für Licht, zumindest für einen Teilbereich des sichtbaren Spektrums, relativ undurchlässig, bei dem transparenteren, farbschwächeren Zustand kann Licht durch die in ihrer optischen Wirkung elektrisch veränderbare Schicht besser hindurch treten als im opakeren Zustand. Der opakere Zustand der in ihrer optischen Wirkung elektrisch veränderbaren Schicht wird auch als opaker, geschlossener, ausgeschalteter, farbiger oder spannungsloser Zustand bezeichnet. Der transparentere Zustand der in ihrer optischen Wirkung elektrisch veränderbaren Schicht wird auch als transparenter, offener, farbschwächerer oder eingeschalteter Zustand bezeichnet. Die optische Wirkung der elektrisch veränderbaren Schicht betrifft hier beispielsweise den Transmissionsgrad, die Farbigkeit, die optische Dichte, die Polarisation des Lichtes oder die Lichtstreuung. Unter Farbigkeit wird hierbei jede Farbe verstanden, die in einem Farbmodell wie z. B. dem RGB-Farbmodell (R = Rot; G = Grün; B = Blau) oder dem CMYK-Farbmodell (C = Cyan; M = Magenta; Y = Gelb; K = Schwarz) als Farbpunkt innerhalb eines Farbraums dargestellt werden kann. Die in ihrer optischen Wirkung elektrisch veränderbare Schicht kann somit die Farbigkeit unter der Einwirkung eines elektrischen Feldes von einem ersten Farbpunkt zu einem zweiten Farbpunkt innerhalb eines Farbraums ändern. Eine Änderung der Farbigkeit kann auch eine Kontraständerung beispielsweise von schwarz nach weiß oder von dunkel-grün nach hell-grün bewirken. Eine Änderung der Farbigkeit kann auch eine Änderung des Transmissionsgrads der in ihrer optischen Wirkung elektrisch veränderbaren Schicht hervorrufen oder umgekehrt.

Der Transmissionsgrad, die Farbigkeit, die optische Dichte, die Polarisation des Lichtes oder die Lichtstreuung der mindestens einen ihrer optischen Wirkung elektrisch veränderbaren Schicht kann in Abhängigkeit von der angelegten Spannung stufenlos zwischen zwei Extremwerten geändert werden, z. B. zwischen einem minimal lichtdurchlässigen und somit einem maximal opaken Zustand bei keiner angelegten Spannung und einem maximal lichtdurchlässigen und somit einem maximal transparenten Zustand bei einem bestimmten Spannungswert ungleich Null.

Die stäbchenförmigen Farbstoffmoleküle richten sich aufgrund ihrer Stäbchenform mit ihren Längsachsen an den Längsachsen der räumlich benachbarten in dem elektrischen Feld ausrichtbaren Flüssigkristalle aus. Wird beispielsweise die Ausrichtung der Längsachsen der in einem elektrischen Feld ausrichtbaren Flüssigkristalle durch ein elektrisches Feld verändert, richten sich die Längsachsen der stäbchenförmigen Farbstoffmoleküle entsprechend der verändert ausgerichteten Längsachsen der in dem elektrischen Feld ausrichtbaren Flüssigkristalle aus. Die stäbchenförmigen Farbstoffmoleküle richten sich hierbei insbesondere gemäß den räumlich benachbarten Flüssigkristallen aus. Unter räumlich benachbart werden hierbei diejenigen Flüssigkristalle verstanden, welche die entsprechenden stäbchenförmigen Farbstoffmoleküle direkt umgeben. Da die räumliche Ausdehnung der stäbchenförmigen Farbstoffmoleküle entlang ihrer Längsachse deutlich größer ist als die Ausdehnung der stäbchenförmigen Farbstoffmoleküle entlang ihrer Querachse und somit ihre Länge deutlich größer ist als ihre Breite, weisen die stäbchenförmigen Farbstoffmoleküle ein Längen-zu-Breiten-Verhältnis auf, welches sich von 1 unterscheidet. Vorzugsweise ist dieses Verhältnis größer oder gleich 2, bevorzugt größer oder gleich 3 und weiter bevorzugt größer oder gleich 5.

Unter dem Begriff Betrachtungswinkel wird hierbei sowohl der Winkel verstanden, unter dem die mindestens eine in ihrer optischen Wirkung elektrisch veränderbare Schicht des Sicherheitselements von einem Betrachter betrachtet wird, als auch der Winkel, unter dem die mindestens eine in ihrer optischen Wirkung elektrisch veränderbare Schicht des Sicherheitselements von einer Beleuchtungseinrichtung beleuchtet wird. Als Betrachtungswinkel wird der zwischen der Flächennormale der von der Unterseite des Sicherheitselements aufgespannten Ebene und der Betrachtungsrichtung eines Beobachters eingeschlossene Winkel verstanden. Ebenso wird als Betrachtungswinkel der zwischen der Flächennormale der von der Unterseite des Sicherheitselements aufgespannten Ebene und der Beleuchtungsrichtung einer Beleuchtungseinrichtung eingeschlossene Winkel verstanden. So blickt beispielsweise ein Betrachter unter dem Betrachtungswinkel von 0° senkrecht auf die Oberfläche des Sicherheitselements und bei einem Betrachtungswinkel von 70° blickt ein Betrachter unter einem flachen Winkel auf das Sicherheitselement. Ändert sich die Betrachtungsrichtung des Beobachters oder die Beleuchtungsrichtung der Beleuchtungseinrichtung, ändert sich folglich der Betrachtungswinkel.

Weitere vorteilhafte Ausgestaltungen der Erfindung sind in den Unteransprüchen bezeichnet.

Vorzugsweise beträgt die die Ausrichtungseffizienz der Längsachsen der stäbchenförmigen Farbstoffmoleküle bezogen auf die Längsachsen der in dem elektrischen Feld ausrichtbaren Flüssigkristalle zwischen 50 % und 100 %, bevorzugt zwischen 70 % und 100 %. Je höher die Ausrichtungseffizienz der Längsachsen der stäbchenförmigen Farbstoffmoleküle bezogen auf die Längsachsen der in dem elektrischen Feld ausrichtbaren Flüssigkristalle ist, desto besser ist der Kontrast zwischen dem opakeren, farbigen Zustand und dem transparenteren, farbschwächeren Zustand der mindestens einen in ihrer optischen Wirkung elektrisch veränderbaren Schicht. Unter Ausrichtungseffizienz der Längsachsen der stäbchenförmigen Farbstoffmoleküle bezogen auf die Längsachsen der in dem elektrischen Feld ausrichtbaren Flüssigkristalle wird hierbei derjenige Prozentsatz der stäbchenförmigen Farbstoffmoleküle verstanden, der dieselbe Ausrichtung aufweist wie die in dem elektrischen Feld ausrichtbaren Flüssigkristalle. Eine Ausrichtungseffizienz von 30 % bedeutet, dass beispielsweise die Längsachsen von 300 stäbchenförmigen Farbstoffmolekülen von insgesamt 1000 stäbchenförmigen Farbstoffmolekülen dieselbe Ausrichtung aufweisen wie die in dem elektrischen Feld ausrichtbaren Flüssigkristalle.

Weiter ist es vorteilhaft, wenn die stäbchenförmigen Farbstoffmoleküle lösliche, nicht-ionische, chemisch, photochemisch und/oder elektrochemisch stabile Farbstoffmoleküle sind. Hierdurch ist es möglich, die Verwendungsdauer des Sicherheitselements zu erhöhen, da sich beispielsweise die optischen Eigenschaften stabiler Farbstoffmoleküle über einen langen Verwendungszeitraum und unter verschiedenen Umwelteinflüssen kaum verschlechtern.

Weiter ist es möglich, dass die stäbchenförmigen Farbstoffmoleküle konjugierte Farbstoffmoleküle, vorzugsweise konjugierte, aromatische Farbstoffmoleküle, sind. Weiter ist es möglich, dass die stäbchenförmigen Farbstoffmoleküle lineare, polyzyklische, aromatische, konjugierte Farbstoffmoleküle sind. Derartige Farbstoffmoleküle weisen geeignete Absorptionseigenschaften für Licht in einem für das menschliche Auge sichtbaren Wellenlängenbereich, insbesondere im Wellenlängenbereich von 380 nm bis 780 nm, auf.

Weiter ist vorteilhaft, wenn die stäbchenförmigen, konjugierten Farbstoffmoleküle ein oder mehrere Heteroatome, insbesondere ein oder mehrere Stickstoffatome oder ein oder mehrere Sauerstoffatome, aufweisen. Hierdurch lassen sich die Absorptionseigenschaften der stäbchenförmigen Farbstoffmoleküle weiter beeinflussen.

Weiter ist es auch möglich, dass die stäbchenförmigen Farbstoffmoleküle zumindest ein auf einem Anthrachinonfarbstoff und/oder einem Azofarbstoff basierendes Molekül aufweisen.

Weiter ist es von Vorteil, wenn die die in einem elektrischen Feld ausrichtbaren Flüssigkristalle, welche derart ausgebildet sind, dass die in dem elektrischen Feld ausrichtbaren Flüssigkristalle gleichzeitig als Farbstoffmoleküle wirken, Moleküle aus der Gruppe der Oligo(p-Phenylen-Vinylene) (OPV), insbesondere OPV-Oligomere, sind. Hierbei ist von Vorteil, wenn die Oligomere aus mindestens zwei, bevorzugt drei Phenylen-Vinylen-Bausteinen bestehen (Dimere, bzw. Trimere). Dies ermöglicht ein ausreichendes Längen-zu-Breiten-Verhältnis für die Eigenschaft als Flüssigkristall mit orientierungsabhängiger Absorption. Weiter ist es bevorzugt, wenn die gleichzeitig als Farbstoffmoleküle wirkenden Flüssigkristalle maximal zehn Phenylen-Vinylen-Bausteine und insbesondere nur fünf Phenylen-Vinylen-Bausteinen (Pentamere) aufweisen. Dies resultiert in einer ausreichend tiefen Phasenübergangstemperatur zwischen den Flüssigkristallphasen, welche kompatibel mit Rolle-zu-Rolle Druckprozessen ist.

Gemäß einem weiteren bevorzugten Ausführungsbeispiel der Erfindung beträgt die Konzentration der stäbchenförmigen Farbstoffmoleküle in der mindestens einen in ihrer optischen Wirkung elektrisch veränderbaren Schicht zwischen 0,15 Gewichtsprozent und 2,0 Gewichtsprozent und besonders bevorzugt zwischen 0,5 Gewichtsprozent und 2,0 Gewichtsprozent.

Vorzugsweise absorbieren die stäbchenförmigen Farbstoffmoleküle Licht in einem für das menschliche Auge sichtbaren Wellenlängenbereich, bevorzugt im Wellenlängenbereich von 380 nm bis 780 nm, weiter bevorzugt im Wellenlängenbereich von 430 nm bis 690 nm, welches senkrecht auf die Längsachse der stäbchenförmigen Farbstoffmoleküle auftrifft, stärker als Licht, welches parallel zur Längsachse der stäbchenförmigen Farbstoffmoleküle auftrifft. Aufgrund ihrer stäbchenförmigen Form weisen die Farbstoffmoleküle eine anisotrope Absorption derart auf, dass Licht, dessen elektrischer Feldvektor senkrecht zur Längsachse der stäbchenförmigen Farbstoffmoleküle verläuft, eine geringere Absorption für eine bestimmte Wellenlänge von einfallendem Licht erfährt als Licht, dessen elektrischer Feldvektor nicht senkrecht zur Längsachse der stäbchenförmigen Farbstoffmoleküle verläuft. So erfährt beispielsweise Licht, welches sich parallel zur Längsachse der stäbchenförmigen Farbstoffmoleküle ausbreitet, eine geringere Absorption als Licht, welches sich senkrecht zur der Längsachse der stäbchenförmigen Farbstoffmoleküle ausbreitet. Unter stärkerer bzw. schwächerer Absorption entlang einer Ausbreitungsrichtung des Lichts senkrecht/parallel zur Längsachse der stäbchenförmigen Farbstoffmoleküle oder bezogen auf das senkrechte/parallele Auftreffen auf die Längsachse der stäbchenförmigen Farbstoffmoleküle wird hierbei ein Unterschied der Absorption der stäbchenförmigen Farbstoffmoleküle bezüglich der senkrechten/parallelen Ausbreitungsrichtung des Lichts oder dem senkrechten/parallelen Auftreffen des Lichts um mindestens den Faktor 2, bevorzugt 4, weiter bevorzugt 10, und besonders bevorzugt 20 verstanden. Dieser Faktor ist bezogen auf die Wellenlänge mit der stärksten Absorption im Wellenlängenbereich von 380 nm bis 780 nm.

Weiter ist es möglich, dass das Verhältnis des von den stäbchenförmigen Farbstoffmolekülen absorbierten Lichts, welches senkrecht zur Längsachse der stäbchenförmigen Farbstoffmoleküle polarisiert ist, zu absorbiertem Licht, welches parallel zur Längsachse der stäbchenförmigen Farbstoffmoleküle polarisiert ist, mindestens 2, bevorzugt mindestens 4, weiter bevorzugt mindestens 10, und besonders bevorzugt mindestens 20 ist. Durch diese anisotrope Absorption können die stäbchenförmigen Farbstoffmoleküle eine schaltbare Farbigkeit erzeugen. Die stäbchenförmigen Farbstoffmoleküle können somit die Farbigkeit der mindestens einen in ihrer optischen Wirkung elektrisch veränderbaren Schicht, insbesondere in dem opakeren, farbigen Zustand, bestimmen.

Die stäbchenförmigen Farbstoffmoleküle können so beispielsweise die Farben Rot, Grün, Magenta, Schwarz, Cyan, Gelb, Blau als Farbpunkt innerhalb eines Farbraums, beispielsweise des CMYK-Farbmodells, erzeugen.

Gemäß einem weiteren Ausführungsbeispiel der Erfindung weist das Sicherheitselement eine Stützschicht auf.

Weiter ist es von Vorteil, dass die Stützschicht senkrecht zu der von der Unterseite des Sicherheitselements aufgespannten Ebene gesehen zumindest teilweise einen Rahmen um die mindestens eine in ihrer optischen Wirkung elektrisch veränderbare Schicht bildet, welcher die mindestens eine in ihrer optischen Wirkung elektrisch veränderbare Schicht mechanisch verstärkt. Eine derartige Stützschicht trägt zum einen zur mechanischen Stabilisierung der mindestens einen in ihrer optischen Wirkung elektrisch veränderbaren Schicht bei und zum anderen zur Vereinheitlichung des Abstands zwischen weiteren Schichten, die das Sicherheitselement aufweist. Hierbei sind insbesondere eine erste und zweite Elektrodenschicht, zwischen denen zumindest ein Teil der mindestens einen in ihrer optischen Wirkung elektrisch veränderbaren Schicht angeordnet ist, von Bedeutung. Durch eine derartige Vereinheitlichung des Abstands kann das elektrische Feld über den Bereich der mindestens einen in ihrer optischen Wirkung elektrisch veränderbaren Schicht möglichst konstant gehalten werden und die optische Wirkung der mindestens einen elektrisch veränderbaren Schicht homogen geschaltet werden.

Weiter ist von Vorteil, wenn die Stützschicht elektrisch isolierend ausgebildet ist. Hierdurch wird ein elektrischer Kurzschluss beispielsweise zwischen der ersten Elektrodenschicht und der zweiten Elektrodenschicht vermieden.

Weiter ist es möglich, dass durch die Stützschicht eine Versieglung oder optische Begrenzung der mindestens einen in ihrer optischen Wirkung elektrisch veränderbaren Schicht und/oder eine Optimierung der Haftung weiterer Schichten erreicht werden kann.

Es ist möglich, dass die Stützschicht einen Rahmen um ein oder mehrere Teilbereiche der mindestens einen in ihrer optischen Wirkung elektrisch veränderbaren Schicht bildet. Hierdurch ist es möglich, die mindestens eine in ihrer optischen Wirkung elektrisch veränderbare Schicht mechanisch weiter zu stabilisieren.

Vorzugsweise bildet der Rahmen ein visuell erkennbares Designelement. Ein visuell erkennbares Designelement kann beispielsweise ein graphisch gestalteter Umriss, eine figürliche Darstellung, ein Bild, ein Motiv, ein Symbol, ein Logo, ein Portrait, ein Muster, ein alphanumerisches Zeichen, ein Text und dergleichen sein.

Weiter ist von Vorteil, wenn die Stützschicht farbig ausgebildet ist, insbesondere wenn die Stützschicht ein oder mehrere Farbstoffe und/oder Pigmente aufweist. Hierbei ist es auch möglich, dass die Stützschicht bereichsweise eingefärbt ist. So kann die Stützschicht bereichsweise als opake eingefärbte Stützschicht und/oder als bereichsweise transparente Stützschicht vorliegen.

Gemäß einem weiteren bevorzugten Ausführungsbeispiel der Erfindung ist die Stützschicht in einer oder mehreren ersten Zonen vorhanden und in einer oder mehreren zweiten Zonen nicht vorhanden, wobei die Stützschicht in den ein oder mehreren ersten Zonen eine Höhe zwischen 1 µm und 50 µm, bevorzugt zwischen 2 µm und 30 µm, weiter bevorzugt zwischen 3 µm und 20 µm, aufweist. Es hat sich überraschenderweise gezeigt, dass durch eine derartig ausgestaltete Stützschicht die mechanische Stabilität der mindestens einen in ihrer optischen Wirkung elektrisch veränderbaren Schicht weiter verbessert werden kann.

Weiter ist es vorteilhaft, dass der Abstand zwischen den ein oder mehreren ersten Zonen zwischen 5 µm und 500 µm, bevorzugt zwischen 10 µm und 300 µm, weiter bevorzugt zwischen 20 µm und 150 µm, beträgt und dass das Sicherheitselement in den ein oder mehreren zweiten Zonen die mindestens eine in ihrer optischen Wirkung elektrisch veränderbare Schicht aufweist. Hierdurch wird es möglich, dass der Abstand insbesondere zwischen einer ersten und einer zweiten Elektrodenschicht, zwischen denen zumindest ein Teil der mindestens einen in ihrer optischen Wirkung elektrisch veränderbaren Schicht angeordnet ist, aufgrund der weiteren mechanischen Stabilisierung konstant gehalten und dadurch die optische Wirkung der mindestens einen elektrisch veränderbaren Schicht, beispielsweise infolge eines homogeneren elektrischen Feldes, verbessert wird. Um einen hohen Kontrast zwischen einem opakeren Zustand der in ihrer optischen Wirkung elektrisch veränderbaren Schicht und einem transparenteren Zustand der in ihrer optischen Wirkung elektrisch veränderbaren Schicht zu erzielen, weist die in ihrer optischen Wirkung elektrisch veränderbare Schicht typischerweise einen hohen Anteil an Flüssigkristallen, insbesondere einen Anteil zwischen 50 % und 99 % an Flüssigkristallen, auf. Diese Flüssigkristalle sind vorzugsweise unvernetzt oder nur geringfügig vernetzt, um die benötigte Beweglichkeit für das Schalten der in ihrer optischen Wirkung elektrisch veränderbaren Schicht zu gewährleisten. Hierdurch wird das Sicherheitselement weich und damit anfällig für mechanische Schäden, wie beispielsweise Einkerbungen. Durch die einen oder mehreren ersten Zonen, in denen die Stützschicht vorhanden ist, und die ein oder mehreren zweiten Zonen, in denen das Sicherheitselement die mindestens eine in ihrer optischen Wirkung elektrisch veränderbare Schicht aufweist, wird die Stabilität des Sicherheitselements erhöht und somit dessen Anfälligkeit gegenüber mechanischen Schäden verringert.

Weiter ist es möglich, dass der Abstand zwischen den ein oder mehreren ersten Zonen konstant ist.

Weiter ist es auch möglich, dass der Abstand zwischen den ein oder mehreren ersten Zonen variiert, beispielsweise in einem gleichmäßigen Raster oder auch zufällig oder pseudo-zufällig variiert.

Vorteilhafterweise sind die ein oder mehreren ersten Zonen gemäß einem eindimensionalen oder zweidimensionalen Raster angeordnet.

Weiter ist es von Vorteil, dass die ein oder mehreren ersten Zonen musterförmig, insbesondere zur Darstellung einer ersten Information, ausgestaltet sind. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein.

Gemäß einem bevorzugten Ausführungsbeispiel der Erfindung weist das Sicherheitselement eine erste Elektrodenschicht und eine zweite Elektrodenschicht auf, zwischen denen zumindest ein Teil der mindestens einen in ihrer optischen Wirkung elektrisch veränderbaren Schicht angeordnet ist.

Besonders bevorzugt ist es, wenn die erste Elektrodenschicht und die zweite Elektrodenschicht als eine obere und untere Elektrodenschicht ausgebildet sind, die oberhalb oder unterhalb der mindestens einen in ihrer optischen Wirkung elektrisch veränderbaren Schicht angeordnet sind. Unter den Lagebezeichnungen obere/oberhalb und untere/unterhalb wird hierbei die relative Lage in Bezug auf einen Beobachter des Sicherheitselements, insbesondere appliziert auf ein Substrat, wie beispielsweise ein Sicherheitsdokument, verstanden. Eine obere Elektrodenschicht ist so beispielsweise näher in Bezug auf einen Beobachter angeordnet als eine untere Elektrodenschicht. In einem solchen Fall entsprechen die erste Elektrodenschicht der unteren Elektrodenschicht und die zweite Elektrodenschicht der oberen Elektrodenschicht. Es ist nun möglich, dass die erste Elektrodenschicht und die zweite Elektrodenschicht senkrecht zu der von der Unterseite des Sicherheitselements aufgespannten Ebene ausgebildet sind und zwischen der ersten Elektrodenschicht und der zweiten Elektrodenschicht zumindest ein Teil der mindestens einen in ihrer optischen Wirkung elektrisch veränderbaren Schicht angeordnet ist. Bei Anlegen einer elektrischen Spannung an die erste Elektrodenschicht und die zweite Elektrodenschicht wird im Raum zwischen den beiden Elektroden ein elektrisches Feld erzeugt, welches die Ausrichtung der in einem elektrischen Feld ausrichtbaren Flüssigkristalle verändert. Die Längsachsen der stäbchenförmigen Farbstoffmolekühle verändern sich in Abhängigkeit von den Ausrichtungen der Längsachsen der räumlich benachbarten, in dem elektrischen Feld ausrichtbaren, Flüssigkristalle. Somit wird die optische Wirkung der mindestens einen in ihrer optischen Wirkung elektrisch veränderbaren Schicht verändert.

Die Elektroden können hierzu mit einer Energiequelle, welche die elektrische Spannung erzeugt, verbunden sein. Die optische Wirkung der mindestens einen in ihrer optischen Wirkung elektrisch veränderbaren Schicht kann durch eine gewollte Handlung eines Benutzers erfolgen, z. B. durch Biegen einer piezoelektrischen Energiequelle oder Betätigen eines Tasters oder eines anderen Schaltelementes mit einer dadurch ausgelösten Beaufschlagung der Elektroden mit einer elektrischen Spannung und/oder der mindestens einen in ihrer optischen Wirkung elektrisch veränderbaren Schicht mit einem elektrischen oder elektromagnetischen Feld, oder ohne absichtliches Zutun eines Benutzers durch Einflüsse aus der Umgebung ausgelöst werden, z. B. durch unbewusstes Passieren eines RF-Feldes (*engl.* radio frequency - RF) oder durch Einfall von Licht auf eine Solarzelle mit einer dadurch ausgelösten Beaufschlagung der Elektroden mit einer elektrischen Spannung und/oder der mindestens einen in ihrer optischen Wirkung elektrisch veränderbaren Schicht mit einem elektrischen oder elektromagnetischen Feld. Die Solarzelle kann beispielsweise eine mittels Drucktechnologien herstellbare organische, insbesondere flexible, Solarzelle sein. Andere mögliche Energiequellen sind beispielsweise Batterien, Kondensatoren oder ein oder mehrere Antennenelemente, die durch äußere, auf die ein oder mehreren Antennenelemente einwirkenden elektromagnetischen Felder, insbesondere RF-Felder, elektrische Signale generieren können. Diese elektrischen Signale weisen die zur Schaltung der mindestens einen in ihrer optischen Wirkung elektrisch veränderbaren Schicht notwendigen Strom- und/oder Spannungswerte auf.

Vorzugsweise weist das elektrische Feld zwischen der ersten Elektrodenschicht und der zweiten Elektrodenschicht Feldstärken im Bereich von 0,25·10⁴ V/cm bis 5,0·10⁴ V/cm, bevorzugt im Bereich von 0,75·10⁴ V/cm bis 3,5·10⁴ V/cm und besonders bevorzugt im Bereich von 0,75·10⁴ V/cm bis 2,5·10⁴ V/cm auf.

Die Elektrodenschichten bestehen vorzugsweise aus Materialien mit guter elektrischer Leitfähigkeit von mehr als 10⁻³ S/cm und bevorzugt mehr als 1 S/cm. Hierbei ist es möglich, dass die erste Elektrodenschicht und/oder die zweite Elektrodenschicht eine Schicht aus Polyethylendioxythipen (PEDOT)/PSS oder PANI ist.

Weiter ist es auch möglich, dass die erste Elektrodenschicht und/oder die zweite Elektrodenschicht eine Schicht aus Indium-Zinnoxid (ITO) ist. Bei derartigen Schichten handelt es sich um transparente, elektrisch leitfähige Schichten.

Weiter ist von Vorteil, dass die erste Elektrodenschicht und/oder die zweite Elektrodenschicht transparent oder semi-transparent ist/sind.

Weiter ist es auch möglich, dass die erste Elektrodenschicht und/oder die zweite Elektrodenschicht eine dünne Metallschicht aus Gold, Silber, Chrom, Kupfer oder Aluminium, insbesondere mit einer Schichtdicke zwischen 0,5 nm und 50 nm, ist, oder feine Drähte bzw. filigrane Linien aus den oben genannten Metallen insbesondere mit einem Durchmesser bzw. Breite zwischen 1 µm und 100 µm.

Gemäß einem weiteren bevorzugten Ausführungsbeispiel besteht die erste Elektrodenschicht und/oder die zweite Elektrodenschicht aus einem Schichtstapel mit mindestens zwei Schichten, bevorzugt aus den zuvor genannten Materialien mit guter elektrischer Leitfähigkeit. Beispielsweise kann die erste Elektrodenschicht und/oder die zweite Elektrodenschicht aus einer Doppelschicht bestehen, wobei die erste Schicht dieser Doppelschicht aus filigranen Linien aus Silber oder Aluminium mit einer Breite von z. B. 5 µm und einer Dicke der filigranen Linien von z. B. 30 nm sowie einem mittleren Abstand der filigranen Linien von z. B. 200 µm besteht und die zweite Schicht dieser Doppelschicht eine vollflächige Schicht aus Polyethylendioxythipen PEDOT/PSS mit einer Dicke von z. B. 100 nm ist. Die zweite Schicht kann alternativ aus ITO (Indium-Zinn-Oxid) bestehen.

Vorteilhafterweise ist die erste Elektrodenschicht und/oder die zweite Elektrodenschicht in einem ersten Bereich vorgesehen und in einem zweiten Bereich nicht vorgesehen, wobei der erste Bereich musterförmig ausgestaltet ist, insbesondere zur Darstellung einer zweiten Information ausgestaltet ist. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein. So ist es beispielsweise möglich, dass die obere Elektrodenschicht reflektiv, metallisiert ausgebildet ist. Hierbei ist es vorteilhaft, die Metallisierung nur bereichsweise vorzusehen, z. B. als filigrane Linien oder andere graphische Elemente mit geringer Flächenbelegung, um die Sichtbarkeit der darunter liegenden Schichten nicht einzuschränken.

Gemäß einem weiteren bevorzugten Ausführungsbeispiel der Erfindung weist die erste Elektrodenschicht in zumindest einem dritten Bereich erste Mikrostrukturen auf.

So ist es möglich, dass die erste Elektrodenschicht und/oder die zweite Elektrodenschicht aus mehreren Schichten besteht/bestehen, wobei nicht alle der Schichten eine gute Leitfähigkeit aufweisen müssen. So kann beispielsweise die erste Elektrodenschicht aus einer Replizierlackschicht bestehen, in welche in zumindest einem dritten Bereich erste Mikrostrukturen abgeformt sind, und einer Metallschicht bestehen, welche in Form einer Metallisierung auf die Replizierlackschicht zumindest bereichsweise direkt aufgebracht ist. Die Metallschicht bildet hier die leitfähige Schicht der ersten Elektrodenschicht und lässt zusätzlich die durch die ersten Mikrostrukturen generierten optischen Effekte klar hervortreten.

Vorzugsweise weist der zumindest eine dritte Bereich ein oder mehrere Teilbereiche auf, in welche mindestens zwei unterschiedliche erste Mikrostrukturen, insbesondere zwei unterschiedliche Farbeffekte erzeugende erste Mikrostrukturen, abgeformt sind. Hierdurch wird es möglich, die Fälschungssicherheit des Sicherheitselements weiter zu erhöhen, da beispielsweise mehrere unterschiedliche und einprägsame Farbeffekte für einen Betrachter in den Teilbereichen erzeugt werden. Hierbei ist es möglich, dass die Flächenbelegung der einzelnen Teilbereiche derart ist, dass diese von dem unbewaffneten menschlichen Auge aufgelöst werden können und/oder nicht von dem unbewaffneten menschlichen Auge aufgelöst werden können. Insbesondere für den Fall, dass die einzelnen Teilbereiche nicht von dem unbewaffneten menschlichen Auge aufgelöst werden können, ist es möglich, dass sich die einzelnen Farbeffekte der einzelnen Teilbereiche für einen menschlichen Betrachter derart überlagern, dass diese eine Mischfarbe beispielsweise nach dem RGB-Farbmodell erzeugen.

Weiter ist es möglich, dass die erste Elektrodenschicht die ersten Mikrostrukturen in den ein oder mehreren zweiten Zonen, in denen die Stützschicht nicht vorhanden ist, aufweist und in den ein oder mehreren ersten Zonen, in denen die Stützschicht vorhanden ist, nicht aufweist.

So ist es möglich, dass die Stützschicht oder die ein oder mehreren ersten Zonen der Stützschicht eine Teilschicht der ersten Elektrodenschicht ausbilden. So können beispielsweise die ein oder mehreren ersten Zonen der Stützschicht in die Replizierlackschicht der ersten Elektrodenschicht abgeformt sein und in den Zwischenräumen zwischen den ein oder mehreren ersten Zonen können erste Mikrostrukturen abgeformt sein. Weiter ist es möglich, dass die erste Elektrodenschicht eine Metallschicht aufweist, welche in Form einer Metallisierung auf die Replizierlackschicht zumindest bereichsweise aufgebracht ist und die elektrisch leitfähige Schicht der ersten Elektrodenschicht bildet.

Vorteilhafterweise erzeugen die ersten Mikrostrukturen mindestens einen Farbeffekt im Bereich der für das menschliche Auge sichtbaren Wellenlängen, insbesondere im Wellenlängenbereich von 380 nm bis 780 nm.

Vorzugsweise erzeugen die ersten Mikrostrukturen den mindestens einen Farbeffekt durch Lichtstreuung und/oder Lichtbrechung und/oder Interferenz.

Gemäß einem weiteren bevorzugten Ausführungsbeispiel der Erfindung sind die ersten Mikrostrukturen erste diffraktive Reliefstrukturen und/oder binäre Mikrostrukturen und/oder mehrstufige Mikrostrukturen.

Weiter ist es von Vorteil, wenn die ersten diffraktiven Reliefstrukturen ausgewählt sind aus der Gruppe Kinegram®, Hologramme, Beugungsstrukturen Nullter Ordnung, Blazegitter, insbesondere asymmetrische Sägezahn-Reliefstrukturen, Beugungsstrukturen, insbesondere lineare sinusförmige Beugungsgitter oder gekreuzte sinusförmige Beugungsgitter oder lineare ein- oder mehrstufige Rechteckgitter oder gekreuzte ein- oder mehrstufige Rechteckgitter, Spiegelflächen, Mattstrukturen, insbesondere anisotrope oder isotrope Mattstrukturen, oder Kombinationen dieser Strukturen.

Weiter ist es auch von Vorteil, dass die binären Mikrostrukturen aus einer zu der von der Unterseite des Sicherheitselements aufgespannten Ebene parallelen Grundfläche und mehreren ersten Elementen bestehen, wobei erste Elementflächen der ersten Elemente jeweils im Wesentlichen parallel zu der Grundebene verlaufen und wobei die ersten Elementflächen der ersten Elemente und die Grundfläche in einer senkrecht zu der Unterseite des Sicherheitselements verlaufenden Richtung beabstandet sind mit einem ersten Abstand, der so gewählt ist, dass insbesondere durch Interferenz des an der Grundfläche und den ersten Elementflächen reflektierten Lichts im Auflicht und/oder insbesondere durch Interferenz des durch die ersten Elementflächen und die Grundflächen transmittierten Lichts im Durchlicht eine Farbe generiert wird. Vorzugsweise beträgt der erste Abstand zwischen 150 nm und 1500 nm. Weiter ist es möglich, dass die binären Mikrostrukturen so ausgestaltet sind, dass sie die Farbe in der ersten Beugungsordnung oder im Streulicht generieren. So ist es möglich, dass die ersten Elemente derart ausgeformt und angeordnet sind, dass zumindest 10 % des einfallenden Lichts, insbesondere zwischen 20 % des einfallenden Lichts und 90 % des einfallenden Lichts, weiter bevorzugt zwischen 30 % und 70 % des einfallenden Lichts aus der Nullten Ordnung abgelenkt wird, insbesondere durch Streuung oder Beugung abgelenkt wird. Weiter ist es möglich, dass zumindest eine laterale Ausdehnung der Projektion jedes ersten Elements auf die Grundebene zwischen 0,25 µm bis 50 µm, vorzugsweise zwischen 0,75 µm und 10 µm beträgt, und/oder, dass der minimale Abstand benachbarter erster Elemente nicht größer als 300 µm ist und insbesondere zwischen 0,5 µm und 300 µm, bevorzugt zwischen 0,5 µm und 50 µm gewählt ist. Weiter ist es möglich, dass die Ausformung und/oder Positionierung der ersten Elemente pseudo-zufällig variiert ist.

Weiter ist es von Vorteil, dass die binären Mikrostrukturen aus einer Vielzahl einander angrenzender zweiter Elemente bestehen, wobei zweite Elementflächen der zweiten Elemente parallel zueinander angeordnet sind und die zweiten Elemente eine jeweils an die jeweilige zweite Elementfläche anschließende Flanke aufweisen, wobei die zweiten Elementflächen benachbarter zweiter Elemente in einer senkrecht zu den zweiten Elementflächen stehenden Richtung beabstandet sind mit einem zweiten Abstand, wobei der zweite Abstand zwischen 150 nm und 1500 nm beträgt. Weiter ist es möglich, dass mindestens drei zweite Elemente derart angeordnet sind, dass die Höhe der binären Mikrostrukturen mindestens dem dreifachen zweiten Abstand entspricht. Die binären Mikrostrukturen haben so eine treppenförmige bzw. stufenpyramidenförmige Ausgestaltung. Derartige binäre Mikrostrukturen werden auch mehrstufige Mikrostrukturen genannt. So ist es möglich, dass die zweiten Elemente einer Hüllkurve folgen, wobei die Hüllkurve eine Spatialfrequenz zwischen 100 Linien/mm und 2000 Linien/mm und eine Höhe von mehr als 500 nm aufweist. Weiter ist es möglich, dass die Hüllkurve ein asymmetrisches Reliefprofil besitzt.

Hierbei hat sich überraschenderweise gezeigt, dass mittels derartigen ausgeformten ersten diffraktiven Reliefstrukturen und/oder binären Mikrostrukturen besonders einprägsame Farbeffekte bzw. Kontrastwechsel in Verbindung mit der mindestens einen in ihrer optischen Wirkung elektrisch veränderbaren Schicht erzielt werden können. So werden insbesondere die von derartig ausgeformten ersten diffraktiven Reliefstrukturen und/oder binären Mikrostrukturen erzeugten Farbeffekte von dem opakeren Zustand der in ihrer optischen Wirkung elektrisch veränderbaren Schicht vollständig überdeckt bzw. verschleiert. Bei einem Wechsel in den transparenteren Zustand der in ihrer optischen Wirkung elektrisch veränderbaren Schicht werden die Farbeffekte von derartig ausgeformten ersten diffraktiven Reliefstrukturen und/oder binären Mikrostrukturen deutlich erkennbar. Hierdurch lassen sich somit kontrastreiche Wechsel erzielen. So ist beispielsweise die in ihrer optischen Wirkung elektrisch veränderbare Schicht als eine homogene farbige, opake Schicht wahrnehmbar, solange die Flüssigkristalle und die stäbchenförmigen Farbstoffmoleküle nicht in einem elektrischen Feld ausgerichtet sind. Die Effekte der ersten diffraktiven Reliefstrukturen und/oder der binären Mikrostrukturen werden überdeckt. Werden die Flüssigkristalle und die sich an den Flüssigkristallen ausrichtenden stäbchenförmigen Farbstoffmoleküle mittels eines elektrischen Feldes ausgerichtet, so wird die in ihrer optischen Wirkung elektrisch veränderbare Schicht transparent und folglich wird beispielsweise der Farbeffekt einer binären Mikrostruktur für einen Betrachter erkennbar.

Weiter kann es vorgesehen sein, dass die zweite Elektrodenschicht in zumindest einem vierten Bereich zweite Mikrostrukturen aufweist, insbesondere zweite diffraktive Reliefstrukturen ausgewählt aus der Gruppe Kinegram® oder Hologramme, Beugungsstrukturen Nullter Ordnung, Blazegitter, insbesondere asymmetrische Sägezahn-Reliefstrukturen, Beugungsstrukturen, insbesondere lineare sinusförmige Beugungsgitter oder gekreuzte sinusförmige Beugungsgitter oder lineare ein- oder mehrstufige Rechteckgitter oder gekreuzte ein- oder mehrstufige Rechteckgitter, lichtbeugende und/oder lichtbrechende und/oder lichtfokussierende Mikro- oder Nanostrukturen, binäre oder kontinuierliche Fresnelllinsen, binäre oder kontinuierliche Fresnel-Freiformflächen, diffraktive oder refraktive Makrostrukturen, insbesondere Linsenstrukturen oder Mikroprismenstrukturen, Spiegelflächen, Mattstrukturen, insbesondere anisotrope oder isotrope Mattstrukturen oder Kombinationen dieser Strukturen, aufweist.

Gemäß einem weiteren bevorzugten Ausführungsbeispiel der Erfindung weist die mindestens eine in ihrer optischen Wirkung elektrisch veränderbare Schicht eine Vielzahl von Sphären auf, welche die Flüssigkristalle und die stäbchenförmigen Farbstoffmoleküle enthalten. Vorzugsweise weisen die Sphären einen Durchmesser von 0,1 µm bis 40 µm auf. Weiter ist es von Vorteil, wenn die Schichtdicke der mindestens einen in ihrer optischen Wirkung elektrisch veränderbaren Schicht mit der Vielzahl von Sphären maximal 90 µm, bevorzugt maximal 45 µm, besonders bevorzugt maximal 15 µm beträgt. Je dicker die Schichtdicke ist, desto effektiver streut bzw. absorbiert die mindestens eine in ihrer optischen Wirkung elektrisch veränderbare Schicht einfallendes Licht in dem opakeren Zustand und desto weniger sind beispielsweise erste Mikrostrukturen der ersten bzw. unteren Elektrodenschicht für einen Betrachter sichtbar. Die Sphären sind beispielsweise in einer Polymermatrix aus Monomeren gebunden, wobei die Monomere mittels ultraviolettem (UV) Licht polymerisiert werden. Hierbei bleiben bevorzugt die Flüssigkristalle in den Sphären beweglich.

Gemäß einem weiteren bevorzugten Ausführungsbeispiel der Erfindung ist die mindestens eine in ihrer optischen Wirkung elektrisch veränderbare Schicht zwischen einer ersten Ausrichtungsschicht mit einer ersten Vorzugsrichtung und einer zweiten Ausrichtungsschicht mit einer zweiten Vorzugsrichtung angeordnet. Die Längsachsen der Flüssigkristalle richten sich hierbei gemäß der ersten Vorzugsrichtung der ersten Ausrichtungsschicht bzw. der zweiten Vorzugsrichtung der zweiten Ausrichtungsschicht aus. Um diese Ausrichtung zu verbessern ist es möglich, oberflächenaktive Stoffe wie beispielsweise Tenside, insbesondere Lecithine, Silane oder Polyimide zu verwenden. Ist beispielsweise die zweite Vorzugsrichtung der zweiten Ausrichtungsschicht um 90° gegenüber der ersten Vorzugsrichtung der ersten Ausrichtungsschicht gedreht, ordnen sich die Längsachsen der Flüssigkristalle in der Nähe der ersten Ausrichtungsschicht gemäß der ersten Vorzugsrichtung an und in der Nähe der zweiten Ausrichtungsschicht gemäß der zweiten Vorzugsrichtung an. In dem dazwischen liegenden Bereich drehen sich die Ausrichtungen der Längsachsen der Flüssigkristalle vorzugsweise kontinuierlich von der ersten Vorzugsrichtung zur zweiten Vorzugsrichtung. Da sich die Ausrichtung der Längsachsen der stäbchenförmigen Farbstoffmoleküle mit der Ausrichtung der Längsachsen der Flüssigkristalle verändert, folgen die stäbchenförmigen Farbstoffmoleküle der Drehung der Flüssigkristalle zwischen der ersten Ausrichtungsschicht und der zweiten Ausrichtungsschicht.

Weiter kann es vorgesehen sein, dass die in dem elektrischen Feld ausrichtbaren Flüssigkristalle cholesterische Flüssigkristalle sind.

Weiter ist es möglich, dass die erste Ausrichtungsschicht und/oder die zweite Ausrichtungsschicht transparent oder semi-transparent ausgestaltet ist/sind.

Weiter ist es auch möglich, dass die zweite Ausrichtungsschicht transparent und die erste Ausrichtungsschicht reflektiv ausgestaltet sind.

Weiter kann vorgesehen sein, dass die zweite Vorzugsrichtung der zweiten Ausrichtungsschicht gegenüber der ersten Vorzugsrichtung der ersten Ausrichtungsschicht gedreht ist, insbesondere um 45° oder 90° gedreht ist.

Weiter kann auch vorgesehen sein, dass die zweite Vorzugsrichtung der zweiten Ausrichtungsschicht und die erste Vorzugsrichtung der ersten Ausrichtungsschicht dieselbe Orientierung aufweisen.

Vorzugsweise weist die erste Ausrichtungsschicht und/oder die zweite Ausrichtungsschicht eine dritte diffraktive Reliefstruktur auf, insbesondere eine Beugungsstruktur Nullter Ordnung auf. So ist es möglich, dass die dritte Reliefstruktur die erste Vorzugsrichtung der ersten Ausrichtungsschicht und/oder die zweite Vorzugsrichtung der zweiten Ausrichtungsschicht bestimmt. Es hat sich überraschenderweise gezeigt, dass sich die Längsachsen der Flüssigkristalle ebenfalls an diffraktiven Reliefstrukturen, insbesondere an hochfrequenten diffraktiven Reliefstrukturen wie z. B. Beugungsstrukturen Nullter Ordnung, ausrichten. Da sich die Ausrichtung der Längsachsen der stäbchenförmigen Farbstoffmole mit der Ausrichtung der Längsachsen der Flüssigkristalle verändert, folgen die stäbchenförmigen Farbstoffmoleküle der Ausrichtung der Flüssigkristalle.

Weiter ist es von Vorteil, dass die erste Ausrichtungsschicht und/oder die zweite Ausrichtungsschicht in zumindest einem fünften Bereich die dritte diffraktive Reliefstruktur und in zumindest einem sechsten Bereich eine vierte diffraktive Reliefstruktur aufweist, wobei sich die dritte diffraktive Reliefstruktur und die vierte diffraktive Reliefstruktur in zumindest einem der Parameter Azimutwinkel, Gitterperiode oder Gittertiefe unterscheiden. Hierdurch lassen sich interessante optische Effekte erzielen, welche die Fälschungssicherheit weiter erhöhen.

Weiter ist es möglich, dass der zumindest eine fünfte Bereich und/oder der zumindest eine sechste Bereich musterförmig ausgestaltet ist, insbesondere zur Darstellung einer dritten Information ausgestaltet ist. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein.

Vorteilhafterweise ist die dritte diffraktive Reliefstruktur und/oder die vierte diffraktive Reliefstruktur eine hochfrequente, insbesondere sinusförmige, Reliefstruktur mit einer Gitterperiode zwischen 190 nm und 500 nm, bevorzugt 300 nm bis 420 nm, und einer Gittertiefe von 50 nm bis 500 nm, bevorzugt 80 nm bis 250 nm. Derartige hochfrequente Reliefstrukturen werden auch Subwellenlängengitter bzw. Beugungsstruktur Nullter Ordnung genannt.

Gemäß einem bevorzugten Ausführungsbeispiel der Erfindung weist das Sicherheitselement eine Reflexionsschicht, insbesondere eine HRI- oder LRI-Schicht oder eine Metallschicht, auf.

Weiter ist es auch möglich, dass die Reflexionsschicht von einer transparenten Reflexionsschicht gebildet wird, beispielsweise einer dünnen oder fein strukturierten metallischen Schicht, z. B. einer Schicht aus feinen Drähten bzw. filigranen Linien aus Metall, oder einer dielektrischen HRI- oder LRI-Schicht (*engl.* high refraction index - HRI, low refraction index - LRI). Eine solche dielektrische Reflexionsschicht besteht beispielsweise aus einer aufgedampften Schicht aus einem Metalloxid, Metallsulfid, z. B. Titanoxid, etc. mit einer Dicke von 10 nm bis 150 nm.

Gemäß einem bevorzugten Ausführungsbeispiel der Erfindung weist das Sicherheitselement mindestens eine erste Polarisatorschicht auf. Hierdurch ist möglich, den Kontrast zwischen einem opakeren Zustand der in ihrer optischen Wirkung elektrisch veränderbaren Schicht und einem transparenteren Zustand der in ihrer optischen Wirkung elektrisch veränderbaren Schicht weiter zu verbessern.

So ist es möglich, dass die mindestens eine erste Polarisatorschicht das durch die mindestens eine erste Polarisatorschicht hindurchtretende Licht linear polarisiert.

Weiter ist von Vorteil, dass das Sicherheitselement eine zweite Polarisatorschicht aufweist, wobei zwischen der mindestens einen ersten Polarisatorschicht und der zweiten Polarisatorschicht zumindest ein Teil der mindestens einen in ihrer optischen Wirkung elektrisch veränderbaren Schicht angeordnet ist. Da durch die erste Polarisatorschicht und durch die zweite Polarisatorschicht nur Licht hindurchtreten kann, welches die gleiche Polarisation wie die erste bzw. zweite Polarisatorschicht aufweist, kann je nach Ausrichtung der Flüssigkristalle und der stäbchenförmigen Farbstoffmoleküle in der mindestens einen in ihrer optischen Wirkung elektrisch veränderbaren Schicht, Licht durch diese hindurchtreten oder wird in der ersten Polarisatorschicht und/oder der zweiten Polarisatorschicht absorbiert.

So ist es möglich, dass die zweite Polarisatorschicht das durch die zweite Polarisatorschicht hindurchtretende Licht linear polarisiert.

Weiter ist es auch möglich, dass die mindestens eine erste Polarisatorschicht und/oder die eine zweite Polarisatorschicht eine Schicht aus semikristallinem Polymer ist.

Vorzugsweise weist die mindestens eine erste Polarisatorschicht und/oder die eine zweite Polarisatorschicht eine Schichtdicke zwischen 5 µm und 15 µm, bevorzugt zwischen 7 µm und 10 µm auf. Hierdurch wird es zum einen durch die Verwendung einer ersten Polarisatorschicht und/oder einer zweiten Polarisatorschicht möglich, den Kontrast zwischen einem opakeren Zustand der in ihrer optischen Wirkung elektrisch veränderbaren Schicht und einem transparenteren Zustand der in ihrer optischen Wirkung elektrisch veränderbaren Schicht für einen Betrachter weiter zu verbessern, und zum anderen kann ein derartiges Sicherheitselement auf Sicherheitsdokumenten mit geringer Dicke, wie beispielsweise Banknoten, eingesetzt werden, ohne dass der Gesamteindruck, die Einsetzbarkeit oder Haltbarkeit des Sicherheitsdokuments durch das Sicherheitselement wesentlich beeinflusst werden.

Weiter ist es auch möglich, dass die mindestens eine erste Polarisatorschicht und/oder die eine zweite Polarisatorschicht eine Farbigkeit aufweist.

Weiter ist es möglich, dass die mindestens eine erste Polarisatorschicht und/oder die eine zweite Polarisatorschicht eine Transmission von Licht im Wellenlängenbereich zwischen 400 nm bis 550 nm von weniger als 30 % aufweist.

Gemäß einem weiteren Ausführungsbeispiel der Erfindung weist das Sicherheitselement mindestens eine erste Farbfilterschicht auf, wobei sich die mindestens eine in ihrer optischen Wirkung elektrisch veränderbare Schicht und die mindestens eine erste Farbfilterschicht gegenseitig zumindest teilweise überlappen. Hierdurch es möglich, weitere Farbwechsel zu genieren bzw. bestehende Farbwechsel zu verstärken. So ist beispielsweise möglich, einen roten, opaken Farbeindruck des opakeren Zustands der mindestens einen in ihrer optischen Wirkung elektrisch veränderbaren Schicht durch eine rote Farbfilterschicht zu verstärken. Hierdurch kann der Fälschungsschutz des Sicherheitselements weiter erhöht werden.

Weiter ist von Vorteil, wenn das Sicherheitselement eine zweite Farbfilterschicht aufweist, wobei zwischen der mindestens einen ersten Farbfilterschicht und der zweiten Farbfilterschicht zumindest ein Teil der mindestens einen in ihrer optischen Wirkung elektrisch veränderbaren Schicht angeordnet ist und die mindestens eine erste Farbfilterschicht und die zweite Farbfilterschicht unterschiedlich gefärbt sind.

Vorzugsweise bildet die mindestens eine erste Farbfilterschicht und/oder die zweite Farbfilterschicht ein Muster mit unterschiedlich gefärbten Musterelementen aus. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein.

Gemäß einem weiteren bevorzugten Ausführungsbeispiel der Erfindung weist das Sicherheitselement mindestens eine Effektschicht auf, welche das optische Erscheinungsbild des Sicherheitselements beeinflusst.

Vorteilhafterweise ist die mindestens eine Effektschicht eine optisch invariable Schicht, insbesondere mindestens eine gedruckte Farbschicht.

Weiter ist es möglich, dass die mindestens eine Effektschicht eine optisch variable Schicht ist, insbesondere mindestens eine Farbschicht, welche ein Bindemittel und optisch variable Pigmente aufweist, ist.

Unter optisch variablen Pigmenten werden hier insbesondere Pigmente verstanden, welche insbesondere aufgrund von Interferenzeffekten einen Farbeffekt erzeugen, der vom Betrachtungswinkel abhängig ist. Um einen derartigen Farbwechseleffekt mit hoher Brillanz zu erzeugen, müssen die Pigmente eine ähnliche Ausrichtung zueinander aufweisen. Derartige Pigmente sind beispielsweise optisch variable Pigmente (*engl.* optically variable pigment - OVP).

Unter einem Bindemittel wird hierbei ein flüssiges Material verstanden, welches verschiedene Pigmente enthält und welches zusammen mit den Pigmenten mittels eines Druckverfahrens übertragen werden kann. Derartige Verbindungen von Bindemitteln und Pigmenten sind beispielsweise optische variable Tinten (*engl.* optically variable ink - OVI®), welche insbesondere durch Interferenzeffekte einen optisch variablen Farbeindruck erzeugen. OVIs müssen typischerweise, um einen erkennbaren Farbwechseleffekt von hoher Brillanz zu erzeugen, in großen Schichtdicken gedruckt werden.

Weiter ist es möglich, dass die mindestens eine Effektschicht eine Replizierlacksicht ist, in welche fünfte diffraktive Reliefstrukturen abgeformt sind, insbesondere Kinegram® oder Hologramme, Beugungsstrukturen Nullter Ordnung, Blazegitter, insbesondere asymmetrische Sägezahn-Reliefstrukturen, Beugungsstrukturen, insbesondere lineare oder gekreuzte sinusförmige Beugungsgitter, lichtbeugende und/oder lichtbrechende und/oder lichtfokussierende Mikro- oder Nanostrukturen, binäre oder kontinuierliche Fresnelllinsen, binäre oder kontinuierliche Fresnel-Freiformflächen, diffraktive oder refraktive Makrostrukturen, insbesondere Linsenstrukturen oder Mikroprismenstrukturen, Spiegelflächen oder Mattstrukturen, insbesondere anisotrope oder isotrope Mattstrukturen oder Kombinationen dieser Strukturen.

Weiter ist von Vorteil, wenn die fünften diffraktiven Reliefstrukturen der Replizierlacksicht zumindest bereichsweise metallisiert sind.

Gemäß einem weiteren bevorzugten Ausführungsbeispiel der Erfindung variiert die Dicke der mindestens einen in ihrer optischen Wirkung elektrisch veränderbaren Schicht in vorbestimmter Weise. Es ist möglich, dass die mindestens eine in ihrer optischen Wirkung elektrisch veränderbare Schicht eine linear sich über die Breite der Schicht erstreckende Schichtdickenänderung aufweist, oder eine radial von einem Punkt ausgehende Schichtdickenänderung. Da ein dickerer Bereich der mindestens einen in ihrer optischen Wirkung elektrisch veränderbaren Schicht eine längere Zeitspanne oder ein höheres elektrisches Feld benötigt, um zwischen dem opakeren, farbigen Zustand und dem transparenteren, farbschwächeren Zustand zu wechseln, können auf diese Weise sich mit der Zeit und/oder mit der angelegten Spannung örtlich veränderbare Zustandswechsel generiert werden. Beispielsweise können so auch optische Wirkungen ähnlich einem Bewegungseffekt der mindestens einen in ihrer optischen Wirkung elektrisch veränderbaren Schicht erzielt werden.

Vorzugsweise weist das Sicherheitselement senkrecht zu der von der Unterseite des Sicherheitselements aufgespannten Ebenen eine Dicke von maximal 100 µm, bevorzugt maximal 80 µm, weiter bevorzugt maximal 60 µm, und besonders bevorzugt maximal 40 µm, auf. Ein derartiges Sicherheitselement ist beispielsweise besonders für dünne und flexible Sicherheitsdokumente, wie beispielsweise Banknoten geeignet.

Weiter ist es möglich, dass die optische Wirkung der mindestens einen in ihrer optischen Wirkung elektrisch veränderbaren Schicht reversibel steuerbar ist. Hierdurch ist es insbesondere für den Laien möglich, die Echtheit des Sicherheitselements bzw. Sicherheitsdokuments, auf welchem das Sicherheitselement aufgebracht sein kann, zu überprüfen, da beliebig oft zwischen dem opakeren Zustand und dem transparenteren Zustand der mindestens einen in ihrer optischen Wirkung elektrisch veränderbaren Schicht gewechselt werden kann.

Besonders bevorzugt ist es, wenn das Sicherheitselement insgesamt, sofern auch die mindestens eine in ihrer optischen Wirkung elektrisch veränderbare Schicht in den transparenten Zustand geschaltet ist, transparent oder zumindest semi-transparent ist. Unter semi-transparent wird hier eine optische Dichte (OD) für eine Wellenlänge von 550 nm von weniger als 1,0, bevorzugt weniger als 0,6, besonders bevorzugt weniger als 0,4, weiter bevorzugt von weniger als 0,3 und insbesondere bevorzugt von weniger als 0,2, verstanden.

Gemäß einem weiteren bevorzugten Ausführungsbeispiel der Erfindung weist das Sicherheitselement mindestens eine die mindestens eine in ihrer optischen Wirkung elektrisch veränderbare Schicht steuernde Energiequelle auf, welche beispielsweise eine piezoelektrische Energiequelle mit mindestens einer Schicht aus piezoelektrischem Material sein kann.

Bevorzugt ist die Energiequelle eine mechanisch flexibel ausgestaltete Energiequelle. Hierdurch ist es möglich, diese Energiequelle auch in biegbaren Sicherheitsdokumenten wie Banknoten einzusetzen.

Es hat sich bewährt, wenn als piezoelektrisches Material ein Polymer, insbesondere vom Typ Polyvinylidenfluorid (PVDF), eingesetzt wird. Andere mögliche piezoelektrische Materialien wie Polyamide, Polyurethane, Fluorpolymere und insbesondere davon abgeleitete Copolymere sind auch verwendbar.

Gemäß einer bevorzugten Weiterbildung ist das Sicherheitselement zumindest bereichsweise in einem transparenten Bereich des Sicherheitsdokuments und/oder einem Fenster des Sicherheitsdokuments angeordnet. Durch diese Anordnung sind beide Seiten des Sicherheitselements für einen Betrachter sichtbar. Dadurch ist es möglich, dass das Sicherheitselement je nach Betrachtungsrichtung (Betrachtung von vorne oder hinten), Lichteinfall (Auflicht oder Durchlicht) und Zustand der mindestens einen in ihrer optischen Wirkung elektrisch veränderbare Schicht (opakerer, farbiger Zustand oder transparenterer, farbschwächerer Zustand) eine unterschiedliche optische Erscheinung zeigt.

Das Sicherheitsdokument kann beispielsweise eine Banknote, Wertpapier, Aktie, Kreditkarte, Bankkarte, Barzahlungskarte, Kundenkarte, Ticket oder ein ID-Dokument wie eine Ausweiskarte, Visum, Führerschein, insbesondere eine Chipkarte oder ein Passbuch sein. Im Folgenden werden Ausführungsbeispiele der Erfindung exemplarisch unter Zuhilfenahme der beiliegenden, nicht maßstabgetreuen Figuren erläutert.
- Fig. 1a und Fig. 1b: zeigen schematische Schnittdarstellungen eines Sicherheitselements
- Fig. 1c: zeigt eine schematische Schnittdarstellung einer Sphäre eines Sicherheitselements
- Fig. 1d: zeigt einen schematischen, vergrößerten Ausschnitt der Sphäre nach Fig. 1c
- Fig. 2a und Fig. 2c: zeigen eine schematische Schnittdarstellung eines Sicherheitselements
- Fig. 2b und Fig. 2d: zeigen eine schematische Draufsicht des Sicherheitselements nach Fig. 2a und Fig. 2c
- Fig. 3a und Fig. 3b: zeigen schematische Schnittdarstellungen eines Sicherheitselements
- Fig. 4a bis Fig. 4f: zeigen schematische Draufsichten auf Ausgestaltungsvarianten einer Stützschicht eines Sicherheitselements
- Fig. 5a bis Fig. 5e: zeigen schematische Draufsichten auf Ausgestaltungsvarianten einer Stützschicht eines Sicherheitselements
- Fig. 6a bis Fig. 6c: zeigen schematische Schnittdarstellungen einer Elektrode eines Sicherheitselements
- Fig. 7a bis Fig. 7c: zeigen schematische Draufsichten auf Ausgestaltungsvarianten einer Elektrode eines Sicherheitselements
- Fig. 8: zeigt eine schematische Schnittdarstellung eines Sicherheitselements
- Fig. 9a und Fig. 9c: zeigen eine schematische Schnittdarstellung eines Sicherheitselements
- Fig. 9b und Fig. 9d: zeigen eine schematische Draufsicht des Sicherheitselements nach Fig. 9a und Fig. 9c
- Fig. 10: zeigt eine schematische Schnittdarstellung eines Sicherheitselements
- Fig. 11: zeigt eine schematische Schnittdarstellung eines Sicherheitselements
- Fig. 12a bis Fig. 12c: zeigen schematische Draufsichten auf Ausgestaltungsvarianten von Ausrichtungsschichten eines Sicherheitselements
- Fig. 13a und Fig. 13b: zeigen schematische Schnittdarstellungen eines Sicherheitselements
- Fig. 14: zeigt eine schematische Schnittdarstellung eines Sicherheitselements
- Fig. 15a bis Fig. 15f: zeigen schematische Draufsichten auf Sicherheitselemente
- Fig. 16a und Fig. 16b: zeigt eine schematische Schnittdarstellung eines Sicherheitsdokuments
- Fig. 17: zeigt eine schematische Schnittdarstellung eines Sicherheitsdokuments
- Fig. 18: zeigt eine schematische Schnittdarstellung einer Transferfolie

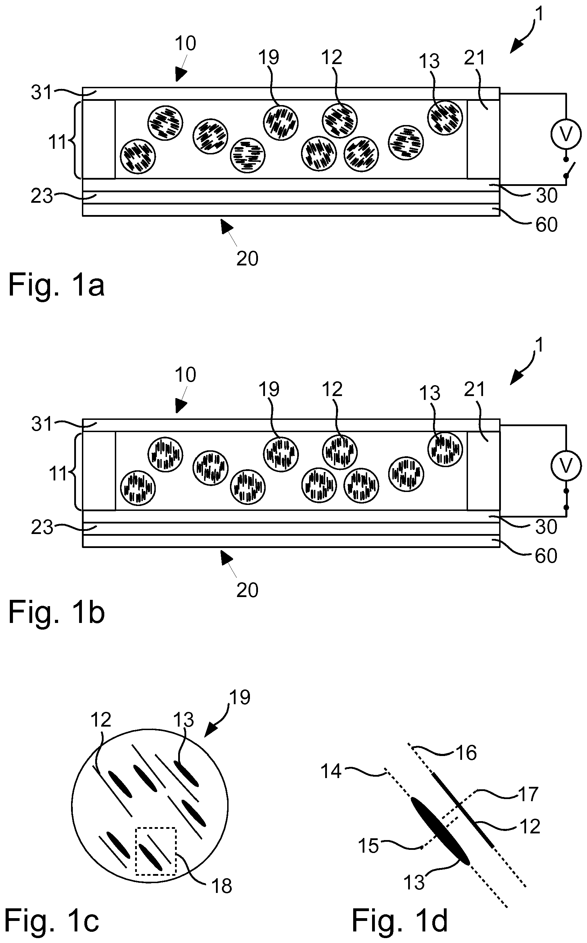

Die Fig. 1a und 1b zeigen ein Sicherheitselement 1 mit einer Oberseite 10 und einer Unterseite 20, welches eine in ihrer optischen Wirkung elektrisch veränderbare Schicht 11, eine erste Elektrodenschicht 30, eine zweite Elektrodenschicht 31, eine Hilfsschicht 23, eine Stützschicht 21 und eine Reflexionsschicht 60 aufweist.

Das Sicherheitselement kann z. B. mittels einer Klebstoffschicht auf einem Substrat angebracht sein, wobei die Klebstoffschicht z. B. zwischen der Reflexionsschicht 60 und dem Substrat angeordnet ist.

Die erste Elektrodenschicht 30 und die zweite Elektrodenschicht 31 ist hier als untere Elektrodenschicht 30 und obere Elektrodenschicht 31 ausgeführt, zwischen denen zumindest ein Teil der in ihrer optischen Wirkung elektrisch veränderbaren Schicht 11 angeordnet ist. An die Elektrodenschichten 30, 31 kann zur Erzeugung eines elektrischen Feldes zwischen den Elektrodenschichten 30, 31 eine Spannung angelegt werden. Die obere Elektrode 31 ist bevorzugt transparent, transluzent oder semi-transparent z. B. aus ITO oder (PEDOT)/PSS ausgebildet. Es ist auch möglich, dass die Elektrodenschichten als dünne Metallschichten beispielsweise aus Gold, Silber, Chrom, Kupfer oder Aluminium, insbesondere mit einer Schichtdicke zwischen 0,5 nm und 50 nm, oder als feine Drähte bzw. filigrane Linien aus den oben genannten Metallen insbesondere mit einem Durchmesser bzw. Breite zwischen 1 µm und 100 µm ausgeformt sind.

Die optionale Hilfsschicht 23 kann beispielsweise eine Klebstoffschicht, eine Haftvermittlerschicht, eine Stabilisierungsschicht, eine Schutzschicht, eine Nivellierschicht oder eine Grundschicht sein.

Die Stützschicht 21, welche senkrecht zu der von der Unterseite 20 des Sicherheitselements aufgespannten Ebene gesehen zumindest teilweise einen Rahmen um die in ihrer optischen Wirkung elektrisch veränderbaren Schicht 11 bildet, kann beispielsweise aus einem UV-gehärteten Lack bestehen. Ferner trägt die Stützschicht 21 zu einer Vereinheitlichung des Abstandes zwischen der ersten Elektrodenschicht 30 und der zweiten Elektrodenschicht 31 im Bereich der in ihrer optischen Wirkung elektrisch veränderbaren Schicht 11 bei, so dass das elektrische Feld über den Bereich der in ihrer optischen Wirkung elektrisch veränderbaren Schicht 11 möglichst konstant ist und die in ihrer optischen Wirkung elektrisch veränderbaren Schicht 11 homogen schaltet. Zudem kann mittels der Stützschicht 21 eine Versiegelung oder optische Begrenzung der mindestens einen in ihrer optischen Wirkung elektrisch veränderbaren Schicht 11 und/oder eine Optimierung der Haftung der zweiten Elektrodenschicht 31 erreicht werden. Die Stützschicht 21 kann auch als Begrenzungsrahmen für die in flüssigem Zustand aufzubringende in ihrer optischen Wirkung elektrisch veränderbaren Schicht 11 dienen, damit die in ihrer optischen Wirkung elektrisch veränderbare Schicht 11 registergenau, d. h. lagegenau relativ zu den anderen Schichten örtlich begrenzt aufgebracht, insbesondere aufgedruckt und/oder aufgerakelt werden kann. Dabei ist die Stützschicht 21 elektrisch isolierend ausgebildet, um einen elektrischen Kurzschluss zwischen der ersten Elektrodenschicht 30 und der zweiten Elektrodenschicht 31 zu vermeiden.

Die Reflexionsschicht 60 ist als Metallschicht beispielsweise aus Gold, Silber, Chrom, Kupfer oder Aluminium ausgeformt. Es ist auch möglich, dass die Reflexionsschicht 60 von einer transparenten oder semi-transparenten Reflexionsschicht gebildet wird, beispielsweise einer dünnen oder fein strukturierten metallischen Schicht oder einer dielektrischen HRI- oder LRI-Schicht (*engl.* high refraction index - HRI, low refraction index - LRI). Eine solche dielektrische Reflexionsschicht besteht beispielsweise aus einer aufgedampften Schicht aus einem Metalloxid, Metallsulfid, z. B. Titanoxid, etc. mit einer Dicke von 10 nm bis 150 nm.

Die in ihrer optischen Wirkung elektrisch veränderbare Schicht 11 weist hierbei Sphären 19, welche Flüssigkristalle 12 und stäbchenförmige Farbstoffmoleküle 13 aufweisen, auf. Vorzugsweise weisen die Sphären einen Durchmesser von 0,1 µm bis 40 µm auf. Die Schichtdicke der in ihrer optischen Wirkung elektrisch veränderbaren Schicht 11 mit der Vielzahl von Sphären 19 beträgt maximal 90 µm, bevorzugt maximal 45 µm, besonders bevorzugt maximal 15 µm. Die Sphären 19 sind beispielsweise in einer Polymermatrix aus Monomeren gebunden, die mittels ultraviolettem (UV) Licht polymerisiert werden.

Fig. 1c zeigt eine vergrößerte Darstellung einer Sphäre 19, welche Flüssigkristalle 12 und stäbchenförmige Farbstoffmoleküle 13 aufweist.

Fig. 1d zeigt wiederum eine vergrößerte Darstellung eines Ausschnitts 18 der Fig. 1c, welche ein Flüssigkristallmolekül 12 mit einer Längsachse 16 und einer Querachse 17 und ein stäbchenförmiges Farbstoffmolekül 13 mit einer Längsachse 14 und einer Querachse 15 zeigt. Bevorzugt ist der Winkel zwischen der Längsachse 16 der Flüssigkristallmoleküle 12 und der Längsachse 14 der stäbchenförmigen Farbstoffmoleküle 13 im Mittel kleiner als 20°, wenn die in ihrer optischen Wirkung elektrisch veränderbare Schicht 11 im transparenteren Zustand ist.

Geeignete stäbchenförmige Farbstoffmoleküle 13 sind beispielsweise Farbstoffe der allgemeinen Formel (1): 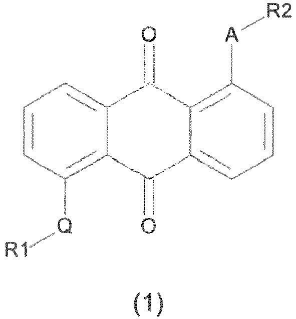 wobei A und Q unabhängig voneinander Stickstoff, Sauerstoff oder Schwefel, vorzugsweise Sauerstoff oder Schwefel, weiter bevorzugt Schwefel, bedeutet und wobei R1 und R2 unabhängig voneinander ein unsubstituierter oder substituierter Arylrest oder ein unsubstituierter oder substituierter

Heteroarylrest, vorzugsweise ein unsubstituierter oder substituierter Phenylrest, bedeutet.

Vorzugsweise können R1 und R2 gleich oder voneinander verschieden substituiert sein.

Ein geeigneter Arylrest weist vorzugsweise wenigstens 6 C-Atome, weiter bevorzugt 6 C-Atome bis 14 C-Atome, auf. Ein geeigneter Arylrest ist beispielsweise ein Phenylrest, ein Naphtylrest, ein Anthrylrest oder Phenanthrylrest, vorzugsweise ein Phenylrest.

Ein geeigneter Heteroarylrest ist beispielsweise ein Pyridylrest, ein Chinolinrest oder ein 3-lsochinolinrest.

Vorgenannte Arylreste, vorzugsweise Phenylreste, oder Heteroarylreste können mit wenigstens einem C1 bis C8 Alkylrest, mit wenigstens einem C1 bis C8 Heteroalkylrest, mit wenigstens einem C1 bis C8 Alkoxyrest, mit wenigstens einem C1 bis C8 Alkylsulfanylrest, mit wenigstens einem Hydroxyrest, mit wenigstens einem Sulfanylrest oder mit wenigstens einem Halogenatom substituiert sein.

Ein vorgenannter C1 bis C8 Alkylrest ist beispielsweise Methyl, Ethyl, 1-Propyl, 2-Propyl, n-But-1-yl, n-But-2-yl, t-But-1-yl oder t-But-2-yl. Ein vorgenannter C1 bis C8 Heteroalkylrest ist beispielsweise Methylamino, Dimethylamino, Ethylamino, Diethylamino oder Trifluormethyl. Ein vorgenannter C1 bis C8 Alkoxyrest ist beispielsweise Methoxy, Ethoxy oder Propoxy. Ein vorgenannter C1 bis C8 Alkylsulfanylrest ist beispielsweise Methylsulfanyl, Ethylsulfanyl oder Propylsulfanyl.

Geeignete Halogenatome sind beispielsweise Fluor, Chlor, Brom oder lod.

Weiter ist es möglich, dass geeignete stäbchenförmige Farbstoffmoleküle 13 beispielsweise Anthrachinonfarbstoffe der Formeln (2) bis (4) sind.

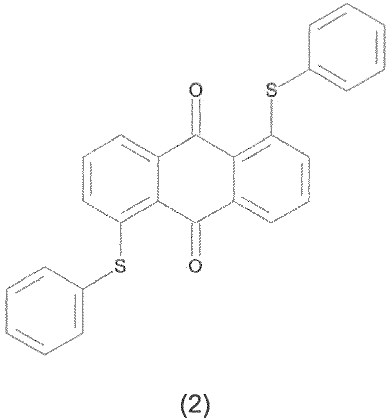

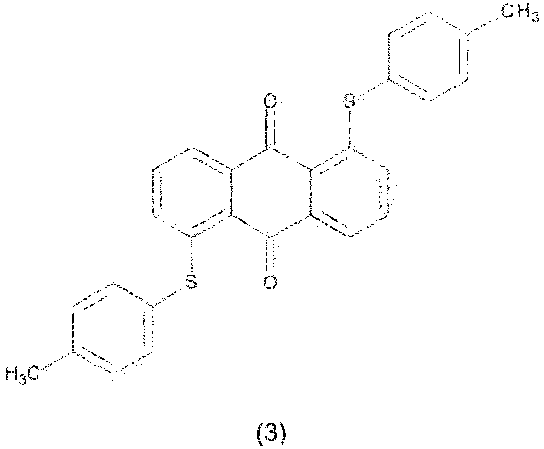

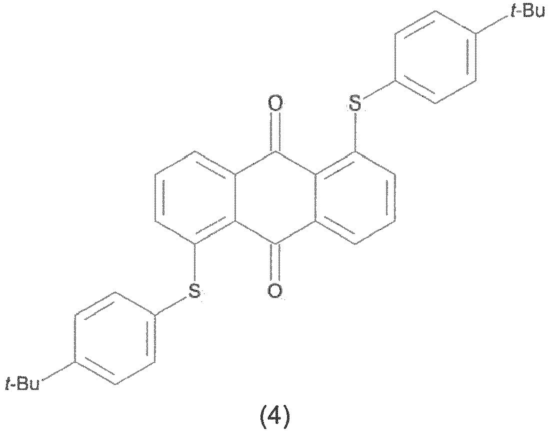

Geeignete Anthrachinonfarbstoffe der Formel (2) bis (4) sind kommerziell erhältlich bei der Firma Nematel GmbH & Co. KG, Mainz, Deutschland.

So ist es möglich, dass die stäbchenförmigen Farbstoffmoleküle 13 ausgewählt sind aus der Gruppe, die aus 1,5-bis(phenylsulfanyl)anthracene-9,10-dione, 1,5-bis(p-tolylsulfanyl)anthracene-9,10-dione, 1,5-bis[(4-tert-butylphenyl)sulfanyl]anthracene-9,10-dione und Mischungen davon besteht. Es hat sich bewährt, wenn die Konzentration der stäbchenförmigen Farbstoffmoleküle 13 in der in ihrer optischen Wirkung elektrisch veränderbaren Schicht 11 zwischen 0,15 Gewichtsprozent und 2,0 Gewichtsprozent, und besonders bevorzugt zwischen 0,5 Gewichtsprozent und 2,0 Gewichtsprozent beträgt. Geeignete Flüssigkristalle 12 sind beispielsweise die Mischung E7 der Firma Merck KGaA, Darmstadt, Deutschland. Eine geeignete Polymermatrix lässt sich durch Polymerisieren der Monomeren NOA65 der Firma Norland Optical Adhesives, Cranbury, USA, herstellen. Der Anteil der Flüssigkristalle 12 in der in ihrer optischen Wirkung elektrisch veränderbaren Schicht 11 beträgt beispielsweise zwischen 50 % und 99 %.

Wenn keine Spannung an den Elektrodenschichten 30, 31 anliegt, sind die Flüssigkristalle 12 im Mittel isotrop ausgerichtet, d. h. statistisch bzw. stochastisch gleichmäßig in alle Richtungen angeordnet. Da sich die Längsachsen 14 der stäbchenförmigen Farbstoffmolekühle 13 in Abhängigkeit von den Ausrichtungen der Längsachsen 17 der räumlich benachbarten in dem elektrischen Feld ausrichtbaren Flüssigkristalle 12 verändern, sind die stäbchenförmigen Farbstoffmoleküle 13 ebenfalls im Mittel isotrop ausgerichtet. Einfallendes Licht wird zum einen durch die Unterschiede im Brechungsindex zwischen den Flüssigkristallen 12 und dem Polymer gestreut und zum anderen teilweise, d. h. in Abhängigkeit der Ausrichtung der Längsachsen 14 der stäbchenförmigen Farbstoffmoleküle 13 absorbiert. Im Ergebnis ist die in ihrer optischen Wirkung elektrisch veränderbare Schicht 11 opak. Je nach verwendetem stäbchenförmigem Farbstoffmolekül 13 kann die in ihrer optischen Wirkung elektrisch veränderbare Schicht 11 auch eine bestimmte Farbigkeit aufweisen. Dieser Zustand ist in Fig. 1a gezeigt.

Da die stäbchenförmigen Farbstoffmoleküle 13 teilweise das einfallende Licht absorbieren, wird die Opazität der in ihrer optischen Wirkung elektrisch veränderbaren Schicht 11 in dem spannungslosen, d. h. ausgeschalteten Zustand, verbessert und optional eine Farbigkeit erzeugt. Die Opazität, d. h. die Undurchsichtigkeit, ist abhängig von der Dicke entlang der Betrachtungsrichtung der in ihrer optischen Wirkung elektrisch veränderbaren Schicht 11, d. h. der Menge bzw. Dichte der Flüssigkristalle 12 und der stäbchenförmigen Farbstoffmoleküle 13 in der Polymermatrix. Je dicker die in ihrer optischen Wirkung elektrisch veränderbare Schicht 11 oder je höher der Anteil der Sphären 19, welche die Flüssigkristalle 12 und die stäbchenförmigen Farbstoffmoleküle 13 aufweisen, ist, desto höher ist die Opazität.

Des Weiteren ist die Opazität abhängig von der Temperatur. Je höher die Temperatur, desto höher ist die Opazität, insbesondere aufgrund der Brownschen Bewegung der Sphären 19, welche die Flüssigkristalle 12 und die stäbchenförmigen Farbstoffmoleküle 13 aufweisen, in der Polymermatrix.

Liegt hingegen an den Elektrodenschichten 30, 31 eine Spannung an und ist folglich ein elektrisches Feld in der in ihrer optischen Wirkung elektrisch veränderbaren Schicht 11 vorhanden, ordnen sich die Flüssigkristalle 12, wie in Fig. 1b dargestellt, parallel zu dem elektrischen Feld an. Die Anordnung der Flüssigkristalle 12 ist daher anisotrop. Da sich die Längsachsen 14 der stäbchenförmigen Farbstoffmolekühle 13 in Abhängigkeit von den Ausrichtungen der Längsachsen 17 der räumlich benachbarten in dem elektrischen Feld ausrichtbaren Flüssigkristalle 12 verändern, sind die stäbchenförmigen Farbstoffmoleküle 13 ebenfalls im Mittel anisotrop ausgerichtet. Einfallendes Licht kann folglich durch die in ihrer optischen Wirkung elektrisch veränderbare Schicht 11 hindurchtreten, da zum einen keine wesentlichen Unterschiede hinsichtlich der Brechungsindizes zwischen den Flüssigkristallen 12 und dem Polymer bestehen und zum anderen die Absorption der stäbchenförmigen Farbstoffmoleküle 13 aufgrund ihrer Ausrichtung bezüglich des einfallenden Lichtes deutlich geringer ist, verglichen mit der isotropen Ausrichtung.

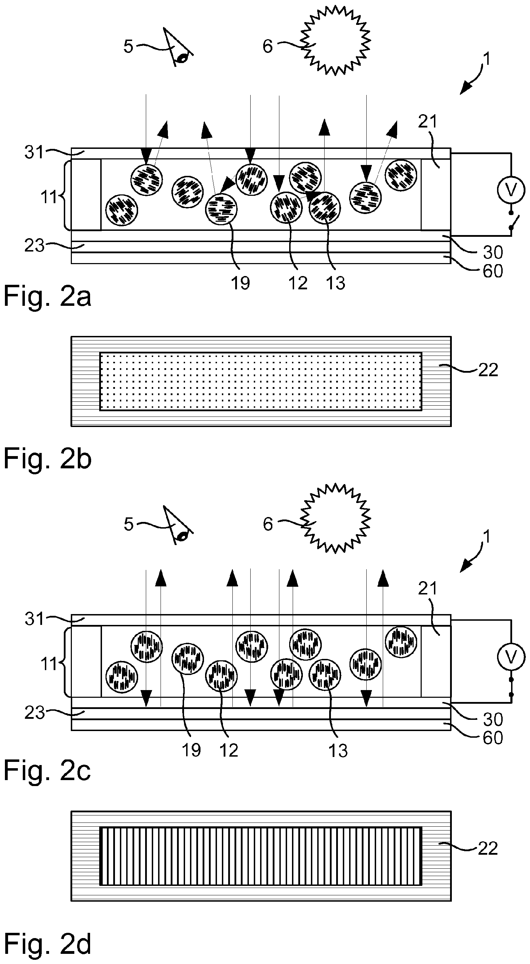

Fig. 2a bis Fig. 2d illustrieren die Funktionsweise eines Sicherheitselements 1 mit einer in ihrer optischen Wirkung elektrisch veränderbaren Schicht 11, einer ersten Elektrodenschicht 30, einer zweiten Elektrodenschicht 31, einer Hilfsschicht 23, einer Stützschicht 21 und einer Reflexionsschicht 60. Bezüglich der Ausgestaltung der Schichten ist hier auf obige Ausführungen verwiesen.

Ein Betrachter 5 blickt von oben auf das Sicherheitselement 1, das im Auflicht mit weißem Licht von einer Lichtquelle 6 beleuchtet wird. Die in ihrer optischen Wirkung elektrisch veränderbare Schicht 11 kann zwischen einem opaken Zustand wie in Fig. 2a gezeigt und einem transparenten Zustand wie in Fig. 2c gezeigt, geschaltet werden.

Im opaken Zustand, wie in Fig. 2a gezeigt, d. h. wenn keine Spannung an die Elektrodenschichten 30, 31 angelegt ist, wird einfallendes Licht zum einen maximal gestreut und zum anderen durch die stäbchenförmigen Farbstoffmoleküle 13 absorbiert. Die stäbchenförmigen Farbstoffmoleküle 13 erzeugen in Fig. 2a aufgrund ihrer lichtabsorbierenden Eigenschaft für den Betrachter 5 eine Farbigkeit, d. h. hier eine rote Farbe. Die in ihrer optischen Wirkung elektrisch veränderbare Schicht 11 ist folglich opak und weist eine rote Farbe auf. Idealerweise erreicht nur ein geringer Anteil des einfallenden Lichts die Reflexionsschicht 60. Dabei bestimmt der Anteil des Lichts, welcher im opaken Zustand die Reflexionsschicht 60 erreicht, den Kontrast der in ihrer optischen Wirkung elektrisch veränderbaren Schicht 11.

Im opaken Zustand der in ihrer optischen Wirkung elektrisch veränderbaren Schicht 11 erscheint das Sicherheitselement 1 somit beispielsweise opak rot bis auf den von der Stützschicht 21 gebildeten Rahmen 22, wie in Fig. 2b gezeigt, da die in ihrer optischen Wirkung elektrisch veränderbare Schicht 11 opak und rot ist.

Im transparenten Zustand der in ihrer optischen Wirkung elektrisch veränderbaren Schicht 11, wie in Fig. 2c gezeigt, d. h. wenn eine Spannung an die Elektrodenschichten 30, 31 angelegt ist, kann das einfallende Licht zum Großteil bis zur Reflexionsschicht 60 hindurchtreten, wird an der Reflexionsschicht 60 reflektiert und durchquert erneut die in ihrer optischen Wirkung elektrisch veränderbare Schicht 11. Der Betrachter 5 kann somit das von der Reflexionsschicht 60 reflektierte Licht erkennen, da sowohl die Lichtstreuung der Flüssigkristalle 12 als auch die Absorption der stäbchenförmigen Farbstoffmoleküle 13 minimal ist.

Im transparenten Zustand ist die in ihrer optischen Wirkung elektrisch veränderbare Schicht 11 des Sicherheitselements 1 somit transparent bis auf den von der Stützschicht 21 gebildeten Rahmen 22, wie in Fig. 2d gezeigt. Optional kann das Material der Stützschicht 21 ebenfalls transparent ausgebildet sein.

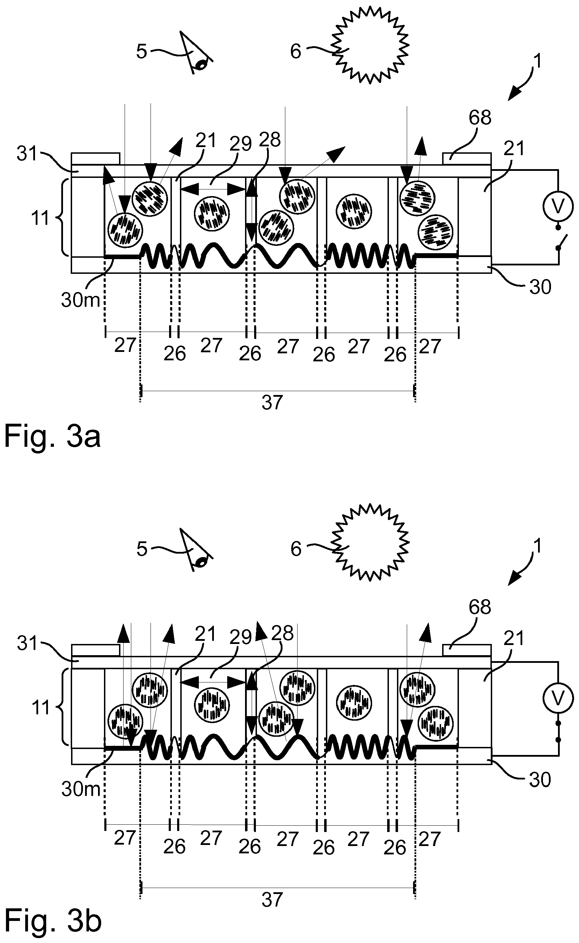

Fig. 3a und Fig. 3b zeigen eine weitere Ausführungsvariante des erfindungsgemäßen Sicherheitselements 1, welches eine erste Elektrodenschicht 30, eine zweite Elektrodenschicht 31, eine Stützschicht 21, eine Effektschicht 68 und eine in ihrer optischen Wirkung elektrisch veränderbare Schicht 11 aufweist.

Die erste Elektrodenschicht 30 und die zweite Elektrodenschicht 31 sind hier als untere Elektrodenschicht 30 und obere Elektrodenschicht 31 ausgestaltet. Die untere Elektrodenschicht 30 weist in dem Bereich 37 erste Mikrostrukturen auf.

Weiter weist die untere Elektrodenschicht 30 in den Zonen 27 eine Metallisierung 30m auf. Die Metallschicht 30m lässt die durch die ersten Mikrostrukturen generierten optischen Effekte klar hervortreten bzw. verstärkt die generierten optischen Effekte.

Weiter ist es auch möglich, dass die obere Elektrodenschicht 31 und/oder die untere Elektrodenschicht 30 aus mehreren Schichten besteht/bestehen. So kann die beispielsweise die untere Elektrodenschicht 30 aus einer Replizierlackschicht bestehen, in welche zumindest bereichsweise erste Mikrostrukturen abgeformt sind, und einer Metallschicht bestehen, welche in Form einer Metallisierung auf die Replizierlackschicht zumindest bereichsweise aufgebracht ist. Die Metallschicht bildet sodann die leitfähige Schicht der unteren Elektrodenschicht 30 und lässt die durch die ersten Mikrostrukturen generierten optischen Effekte klar hervortreten.

Die Stützschicht 21 ist in den Zonen 26 vorhanden und in den Zonen 27 nicht vorhanden. Die Stützschicht 21 weist in den Zonen 26 eine Höhe 28 zwischen 1 µm und 50 µm, bevorzugt zwischen 2 µm und 30 µm, weiter bevorzugt zwischen 3 µm und 20 µm, auf. Der Abstand 29 zwischen den Zonen 26 beträgt zwischen 5 µm und 500 µm, bevorzugt zwischen 10 µm und 300 µm, weiter bevorzugt zwischen 20 µm und 150 µm. Weiter weist das Sicherheitselement 1 in den Zonen 27 die in ihrer optischen Wirkung elektrisch veränderbare Schicht 11 auf. Wie in Fig. 3a gezeigt, ist der Abstand 29 zwischen den Zonen 26, in denen die Stützschicht 21 vorhanden ist, konstant. Es ist jedoch auch möglich, dass der Abstand 29 variiert. Die Stützschicht 21 kann beispielsweise in den Zonen 26 aufgedruckt werden. Die Stützschicht 21 ist hier elektrisch isolierend ausgeführt, so dass ein elektrischer Kurzschluss zwischen der unteren Elektrodenschicht 30 und der oberen Elektrodenschicht 31 vermieden wird.

Es ist auch möglich, dass die Stützschicht 21 aus einem Fotolack gebildet wird. Hierzu wird beispielsweise bereichsweise eine Metallschicht, insbesondere eine Aluminiumschicht, auf eine transparente Grundschicht aufgebracht. Auf die bereichsweise aufgebrachte Metallschicht wird ein Fotolack aufgebracht, der Fotolack wird durch die bereichsweise aufgebrachte Metallschicht hindurch belichtet. Die bereichsweise aufgebrachte Metallschicht dient somit als Belichtungsmaske für den Fotolack. Bei Verwendung eines Negativfotolacks bleiben die belichteten Bereiche als Stützschicht 21 in den Zonen 26 stehen. Alternativ ist es auch möglich, einen Positivfotolack zu verwenden. Der Fotolack kann beispielsweise aufgedruckt oder aufgerakelt werden.

Bezüglich der Ausgestaltung der oberen Elektrodenschicht 31 ist hier auf obige Ausführungen verwiesen.

Die Effektschicht 68 ist auf der dem Betrachter 5 zugewandten Seite angeordnet. Die Effektschicht 68 beeinflusst das optische Erscheinungsbild des Sicherheitselements 1. Die Effektschicht 68 in Fig. 3a und Fig. 3b ist hier als gedruckte Farbschicht ausgeführt und somit eine optisch invariable Schicht. Weiter ist es möglich, dass die mindestens eine Effektschicht 68 eine optisch variable Schicht ist, insbesondere mindestens eine Farbschicht, welche ein Bindemittel und optisch variable Pigmente aufweist, ist. So kann es sich bei der Effektschicht 68 beispielsweise um eine aufgedruckte Schicht aus einer optisch variablen Tinte (*engl.* optically variable ink - OVI®), welche insbesondere durch Interferenzeffekte einen optisch variablen Farbeindruck erzeugen, handeln. Weiter ist es möglich, dass die mindestens eine Effektschicht 68 eine Replizierlacksicht ist, in welche diffraktive Reliefstrukturen abgeformt sind, insbesondere Kinegram® oder Hologramme, Beugungsstrukturen Nullter Ordnung, Blazegitter, insbesondere asymmetrische Sägezahn-Reliefstrukturen, Beugungsstrukturen, insbesondere lineare oder gekreuzte sinusförmige Beugungsgitter, lichtbeugende und/oder lichtbrechende und/oder lichtfokussierende Mikro- oder Nanostrukturen, binäre oder kontinuierliche Fresnelllinsen, binäre oder kontinuierliche Fresnel-Freiformflächen, diffraktive oder refraktive Makrostrukturen, insbesondere Linsenstrukturen oder Mikroprismenstrukturen, Spiegelflächen oder Mattstrukturen, insbesondere anisotrope oder isotrope Mattstrukturen oder Kombinationen dieser Strukturen. Weiter ist es möglich, dass die Effektschicht 68, insbesondere wenn diese als Replizierlacksicht ausgeformt ist, bereichsweise metallisiert ist.

Im opaken Zustand der in ihrer optischen Wirkung elektrisch veränderbaren Schicht 11, wie in Fig. 3a gezeigt, d. h. wenn keine Spannung an die Elektrodenschichten 30, 31 angelegt ist, wird einfallendes Licht einer Lichtquelle 6 zum einen maximal gestreut und zum anderen durch die stäbchenförmigen Farbstoffmoleküle 13 absorbiert. Die eine in ihrer optischen Wirkung elektrisch veränderbare Schicht 11 ist folglich opak und weist beispielsweise eine schwarze Farbe auf.

Im transparenten Zustand der in ihrer optischen Wirkung elektrisch veränderbaren Schicht 11, wie in Fig. 3b gezeigt, d. h. wenn eine Spannung an die Elektrodenschichten 30, 31 angelegt ist, kann das einfallende Licht der Lichtquelle 6 bis zur Metallisierung 30m der unteren Elektrodenschicht 30 hindurchtreten, wird dort an den ersten Mikrostrukturen gebeugt oder gebrochen bzw. falls keine Mikrostrukturen vorhanden sind an der Metallisierung 30m reflektiert und durchquert erneut die in ihrer optischen Wirkung elektrisch veränderbaren Schicht 11. Der Betrachter 5 kann somit die von den ersten Mikrostrukturen erzeugten optischen Effekte bzw. das reflektierte Licht erkennen, da sowohl die Lichtstreuung der Flüssigkristalle 12 als auch die Absorption der stäbchenförmigen Farbstoffmoleküle 13 minimal ist.

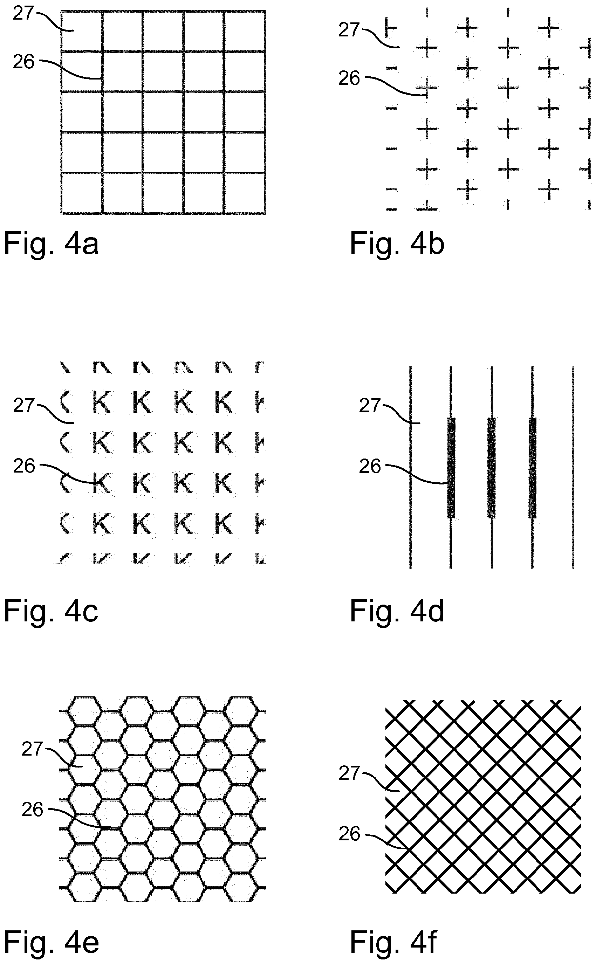

Fig. 4a bis Fig. 4f zeigen Draufsichten auf Ausgestaltungsvarianten einer Stützschicht. Wie in den Fig. 4a bis Fig. 4f gezeigt, ist es möglich, dass die Stützschicht in den Zonen 26 vorhanden ist und in den Zonen 27 nicht vorhanden ist und dass die Zonen 26 musterförmig, insbesondere zur Darstellung einer ersten Information, ausgestaltet sind. Ein Muster kann beispielsweise ein graphisch gestalteter Umriss, eine figürliche Darstellung, ein Bild, ein Motiv, ein Symbol, ein Logo, ein Portrait, ein alphanumerisches Zeichen, ein Text und dergleichen sein. So ist in Fig. 4a die Stützschicht in der Zone 26 schachbrettförmig ausgeformt, in Fig. 4b ist die Stützschicht in den Zonen 26 kreuzförmig ausgeformt, in Fig. 4c ist die Stützschicht in den Zonen 26 in Form eines alphanumerischen Zeichens ausgeformt, in Fig. 4d ist die Stützschicht in den Zonen 26 linienförmig mit unterschiedlichen Breiten ausgeformt, in Fig. 4e ist die Stützschicht in der Zone 26 wabenförmig ausgeformt und in Fig. 4f ist die Stützschicht in der Zone 26 als ein um 45° gedrehtes Schachbrettmuster ausgeformt. Der Abstand zwischen den Zonen 26 beträgt wie in Figur 3a und 3b beschrieben typischerweise zwischen 5 µm und 500 µm, bevorzugt zwischen 10 µm und 300 µm, weiter bevorzugt zwischen 20 µm und 150 µm.

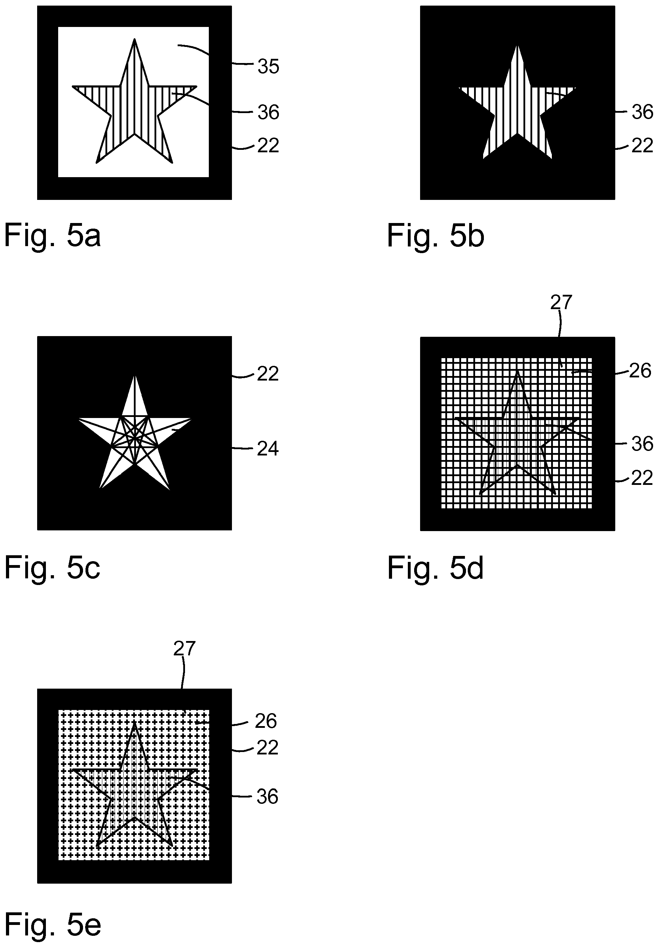

Fig. 5a bis Fig. 5e zeigen Draufsichten auf Ausgestaltungsvarianten einer Stützschicht eines Sicherheitselements 1. So zeigt Fig. 5a einen von der Stützschicht gebildeten Rahmen 22, eine in einem Bereich 35 musterförmig in Form eines Sterns demetallisierte Elektrode. Im Bereich 36 ist die Elektrode metallisiert.

Fig. 5b zeigt einen musterförmigen, in Form eines Sterns von der Stützschicht gebildeten breiten Rahmen 22, sowie die metallisierte Elektrode im Bereich 36.

Fig. 5c zeigt wiederum einen sternförmigen von der Stützschicht gebildeten breiten Rahmen 22, wobei der Rahmen 22 zusätzlich schmale Stege bildet und jeweils die Teilbereiche 24 umrahmt. Fig. 5d zeigt einen von der Stützschicht gebildeten Rahmen 22, sowie die sternförmig metallisierte Elektrode im Bereich 36, wobei die Stützschicht in der Zone 26 vorhanden ist und in den Zonen 27 nicht vorhanden ist. Die Zone 26 ist hierbei schachbrettförmig ausgeformt.

Fig. 5e zeigt einen von der Stützschicht gebildeten Rahmen 22, sowie die sternförmig metallisierte Elektrode im Bereich 36, wobei die Stützschicht in den Zonen 26 vorhanden ist und in den Zonen 27 nicht vorhanden ist. Die Zonen 26 sind hierbei kreuzförmig ausgeformt.

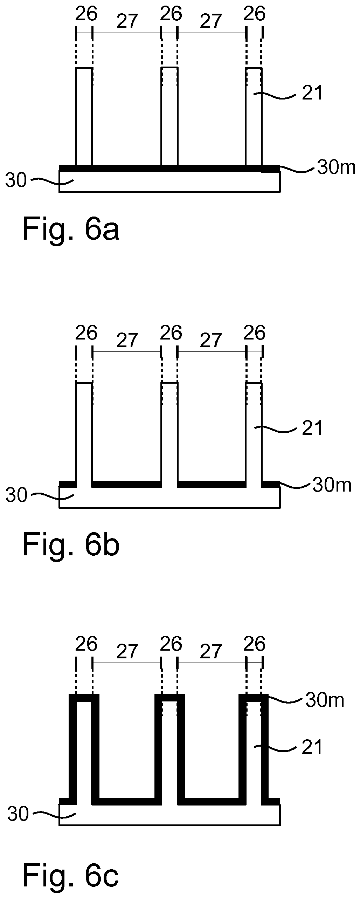

Fig. 6a bis Fig. 6c zeigen Schnittdarstellungen einer Elektrode eines Sicherheitselements 1. So zeigt Fig. 6a eine untere Elektrode 30, auf die eine Metallisierung 30m, beispielsweise aus Gold, Silber, Chrom, Kupfer oder Aluminium vollflächig aufgebracht ist. Weiter weist die untere Elektrode in den Zonen 26 eine Stützschicht 21 auf. Fig. 6b zeigt eine untere Elektrode 30, wobei die untere Elektrode 30 und die Stützschicht 21 eine Schicht bilden oder auch lediglich verbunden sind. So ist es beispielsweise möglich, dass die untere Elektrode aus mehreren Schichten besteht, beispielsweise einer Replizierlackschicht und einer Metallisierung 30m, wobei die Stützschicht 21 auf den demetallisierten Bereichen vorhanden ist, d. h. im Kontakt mit der Replizierlackschicht ist. Dies kann z. B. über einen Lithographieschritt realisiert werden. Stützschicht 21 und Replizierlackschicht bestehen in diesem Fall aus unterschiedlichem Material. Alternativ können die Zonen 26 der Stützschicht 21 beispielsweise auch in die Replizierlackschicht abgeformt sein, wie in Fig. 6b gezeigt. In den Zonen 27, d. h. in den Zwischenräumen der Zonen 26, ist die Metallisierung 30m aufgebracht, welche die elektrisch leitfähige Schicht der unteren Elektrodenschicht 30 bildet. Weiter ist es möglich, dass die Metallisierung 30m in den Zonen 26, den Zonen 27 und an den Flanken der in den Zonen 26 vorhandenen Stützschicht 21 aufgebracht ist, wie in Fig. 6c gezeigt.

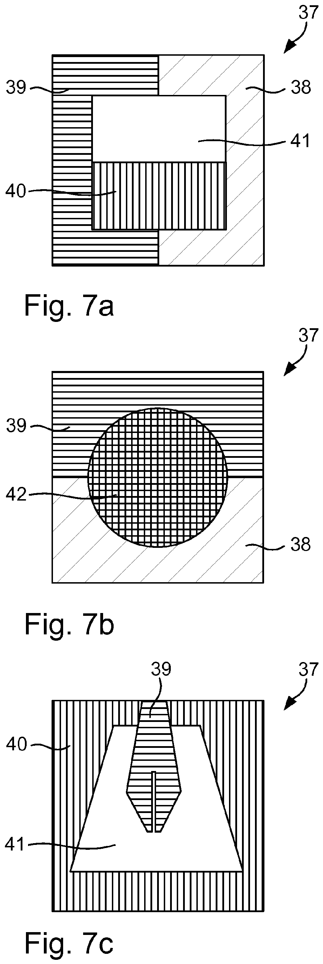

Fig. 7a bis Fig. 7c zeigen schematische Draufsichten auf Ausgestaltungsvarianten einer Elektrode eines Sicherheitselements 1. So zeigt Fig. 7a den Bereich 37 einer untere Elektrode, welcher in den Teilbereichen 38, 39, 40, 41 unterschiedliche Mikrostrukturen aufweist. So weist beispielsweise der Teilbereich 38 eine Spiegelfläche, der Teilbereich 39 eine isotrope Mattstruktur, der Teilbereich 40 eine erste binäre Mikrostruktur und der Teilbereich 41 eine zweite binäre Mikrostruktur auf, welche einen zu der ersten binären Mikrostruktur unterschiedlichen Farbeffekt im Bereich der für das menschliche Auge sichtbaren Wellenlängen, insbesondere im Wellenlängenbereich von 380 nm bis 780 nm, generiert. Der erste Abstand zwischen den ersten Elementflächen der ersten Elemente und der Grundfläche der ersten binären Mikrostruktur beträgt hierbei z. B. 380 nm und der erste Abstand der zweiten binären Mikrostruktur beträgt hierbei z. B. 450 nm. Fig. 7b zeigt eine weitere Ausgestaltungsvariante eines Bereichs 37 einer unteren Elektrode, welcher in den Teilbereichen 38, 39 und 42 unterschiedliche Mikrostrukturen aufweist. So weist der Teilbereich 42 eine hochfrequente diffraktive Reliefstruktur, insbesondere eine Beugungsstruktur Nullter Ordnung basierend auf einem gekreuzten Gitter mit asymmetrischem Gitterprofil auf, wobei der Farbeindruck dieser hochfrequenten diffraktiven Reliefstruktur bei einem steilen Betrachtungswinkel von beispielsweise 10° goldfarben ist. Bezüglich der Teilbereiche 38 und 39 ist hier auf obige Ausführungen verwiesen, d. h. sie weisen jeweils andere Mikrostrukturen auf. Fig. 7c zeigt eine weitere Ausgestaltungsvariante eines Bereichs einer unteren Elektrode, welcher in den Teilbereichen 39, 40 und 41 unterschiedliche Mikrostrukturen aufweist. Bezüglich der Teilbereiche 39, 40 und 41 ist hier auf obige Ausführungen verwiesen.

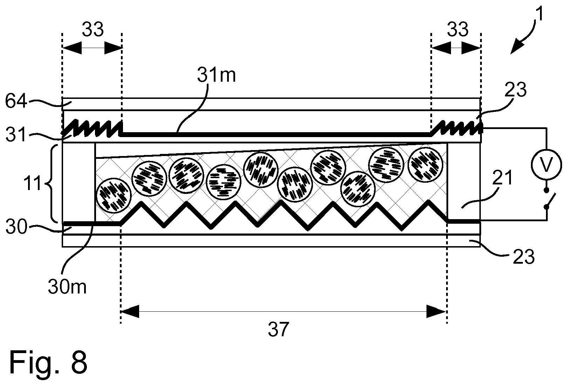

Fig. 8 zeigt eine weitere Ausführungsvariante des erfindungsgemäßen Sicherheitselements 1, welches Hilfsschichten 23, eine erste Elektrodenschicht 30, eine zweite Elektrodenschicht 31, eine Stützschicht 21, eine Polarisatorschicht 64 und eine in ihrer optischen Wirkung elektrisch veränderbare Schicht 11 aufweist. Bezüglich der Schichten 21 und 23 ist hier auf die obigen Ausführungen verwiesen.

Die erste Elektrodenschicht 30 und die zweite Elektrodenschicht 31 ist hier als untere Elektrodenschicht 30 und obere Elektrodenschicht 31 ausgestaltet. Die untere Elektrodenschicht 30 weist in dem Bereich 37 eine Mikrostruktur auf, beispielsweise ein computergeneriertes Hologramm auf. Die untere Elektrodenschicht 30 besteht hier aus zwei Teilschichten, insbesondere einer Replizierlackschicht und einer Metallisierung 30m.

Die Replizierlackschicht besteht beispielsweise aus einem thermoplastischen Lack, in den mittels Hitze und Druck durch Einwirkung eines Prägewerkzeugs eine Oberflächenstruktur abgeformt ist. Weiter ist es auch möglich, dass die Replizierlackschicht von einem UV-vernetzbaren Lack gebildet wird und die Oberflächenstruktur mittels UV-Replikation in die Replizierlackschicht abgeformt wird. Dabei wird die Oberflächenstruktur durch Einwirkung eines Prägewerkzeugs auf die ungehärtete Replizierlackschicht abgeformt und die Replizierlackschicht unmittelbar während oder nach der Abformung durch Bestrahlung mit UV-Licht gehärtet.

Die Replizierlackschicht besitzt vorzugsweise eine Schichtdicke zwischen 0,2 µm und 2 µm. Die Schichtdicke der Replizierlackschicht in Fig. 8 beträgt 0,5 µm und es handelt sich um eine zumindest teilweise chemisch vernetzte Replizierlackschicht. Bei der in die Replizierlackschicht abgeformten Oberflächenstruktur handelt es sich vorzugsweise um Kinegram®, Hologramme, Blazegitter, insbesondere asymmetrische Sägezahn-Reliefstrukturen, Beugungsstrukturen, insbesondere lineare sinusförmige Beugungsgitter oder gekreuzte sinusförmige Beugungsgitter oder lineare ein- oder mehrstufige Rechteckgitter oder gekreuzte ein- oder mehrstufige Rechteckgitter, Spiegelflächen, Mattstrukturen, insbesondere anisotrope oder isotrope Mattstrukturen, oder Kombinationen dieser Strukturen. Weiter ist es auch möglich, dass es sich um binäre Mikrostrukturen handelt. Hierbei ist es möglich, dass die binären Mikrostrukturen aus einer zu der von der Unterseite des Sicherheitselements aufgespannten Ebene parallelen Grundfläche und mehreren ersten Elementen bestehen, wobei die ersten Elementflächen der ersten Elemente jeweils im Wesentlichen parallel zu der Grundebene verlaufen und wobei die ersten Elementflächen der ersten Elemente und die Grundfläche in einer senkrecht zu der Unterseite des Sicherheitselements verlaufenden Richtung beabstandet sind mit einem ersten Abstand, der so gewählt ist, dass insbesondere durch Interferenz des an der Grundfläche und den ersten Elementflächen reflektierten Lichts im Auflicht und/oder insbesondere durch Interferenz des durch die ersten Elementflächen und die Grundflächen transmittierten Lichts im Durchlicht eine Farbe generiert wird, oder dass die binären Mikrostrukturen aus einer Vielzahl einander angrenzender zweiter Elemente bestehen, wobei die zweiten Elementflächen der zweiten Elemente parallel zueinander angeordnet sind und eine an die zweiten Elementflächen der zweiten Elemente anschließende Flanke aufweisen, wobei die zweiten Elementflächen benachbarter zweiter Elemente in einer senkrecht zu den zweiten Elementflächen stehenden Richtung beabstandet sind mit einem zweiten Abstand oder einem Vielfachen des zweiten Abstands, wobei der zweite Abstand zwischen 150 nm und 1500 nm beträgt.

In Fig. 8 ist auf die Replizierlackschicht eine Metallisierung 30m aufgebracht. Bei der Metallisierung handelt es sich vorzugsweise um eine Metallschicht aus Chrom, Aluminium, Gold, Kupfer, Silber oder einer Legierung solcher Metalle, die im Vakuum in einer Schichtdicke von 0,01 µm bis 0,15 µm aufgedampft wird. Weiter ist es auch möglich, dass die Reflexionsschicht von einer transparenten Reflexionsschicht gebildet wird, beispielsweise einer dünnen oder fein strukturierten metallischen Schicht oder einer dielektrischen HRI- oder LRI-Schicht (*engl.* high refraction index - HRI, low refraction index - LRI). Eine solche dielektrische Reflexionsschicht besteht beispielsweise aus einer aufgedampften Schicht aus einem Metalloxid, Metallsulfid, Titanoxid, etc. einer Dicke von 10 nm bis 150 nm. Die Metallisierung 30m in Fig. 8 ist elektrisch leitend und bildet daher die elektrisch leitende Schicht der unteren Elektrode 30.

Die obere Elektrodenschicht 31 weist in dem Bereich 33 eine Mikrostruktur auf, beispielsweise ein Kinegram® oder Hologramme, Beugungsstrukturen Nullter Ordnung, Blazegitter, insbesondere asymmetrische Sägezahn-Reliefstrukturen, Beugungsstrukturen, insbesondere lineare sinusförmige Beugungsgitter oder gekreuzte sinusförmige Beugungsgitter oder lineare ein- oder mehrstufige Rechteckgitter oder gekreuzte ein- oder mehrstufige Rechteckgitter, lichtbeugende und/oder lichtbrechende und/oder lichtfokussierende Mikro- oder Nanostrukturen, binäre oder kontinuierliche Fresnelllinsen, binäre oder kontinuierliche Fresnel-Freiformflächen, diffraktive oder refraktive Makrostrukturen, insbesondere Linsenstrukturen oder Mikroprismenstrukturen, Spiegelflächen, Mattstrukturen, insbesondere anisotrope oder isotrope Mattstrukturen oder Kombinationen dieser Strukturen. Die obere Elektrodenschicht 31 besteht hier aus zwei Teilschichten, insbesondere einer Replizierlackschicht und einer Metallisierung 31m. Bezüglich der Replizierlackschicht der oberen Elektrode und der Metallisierung 31m ist hier auf obige Ausführungen verwiesen.

Die in ihrer optischen Wirkung elektrisch veränderbare Schicht 11 weist in Fig. 8 eine variierende Dicke auf. Wie in Fig. 8 gezeigt, variiert die Dicke der in ihrer optischen Wirkung elektrisch veränderbaren Schicht 11 linear quer über den Folienkörper hinweg, von einer ersten, kleineren Dicke am linken Schichtrand zu einer zweiten, größeren Dicke am rechten Schichtrand. Da dickere in ihrer optischen Wirkung elektrisch veränderbare Schichten 11 mehr Spannung benötigen, um von dem opaken in den transparenten Zustand umzuschalten, kann durch die Dickenänderung der in ihrer optischen Wirkung elektrisch veränderbaren Schicht 11 beispielsweise eine sich über das Sicherheitselement 1 hinweg ausbreitende Transparenz, welche sich mit zunehmender Spannung ausbreitet, erzeugt werden.

Die Polarisationsschicht 64 polarisiert einfallendes Licht beispielsweise linear. Hierdurch ist es möglich, den Kontrast zwischen dem opaken Zustand der in ihrer optischen Wirkung elektrisch veränderbaren Schicht 11 und dem transparenten Zustand der in ihrer optischen Wirkung elektrisch veränderbaren Schicht 11 zu verbessern. Die Polarisationsschicht 64 ist vorzugsweise eine Schicht aus semikristallinem Polymer und weist eine Schichtdicke zwischen 2 µm und 20 µm, bevorzugt zwischen 5 µm und 15 µm, besonders bevorzugt zwischen 7 µm und 10 µm, auf. Weiter kann die Polarisationsschicht 64 eine Farbigkeit aufweisen. So kann die Polarisationsschicht beispielsweise Grün sein.

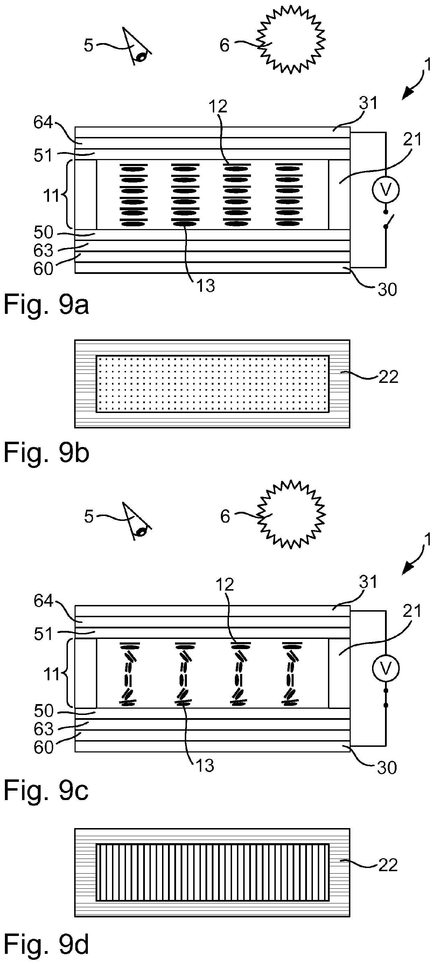

Fig. 9a bis Fig. 9d zeigen eine weitere Ausführungsvariante des erfindungsgemäßen Sicherheitselements 1, welches eine erste Elektrodenschicht 30, eine zweite Elektrodenschicht 31, eine Stützschicht 21, eine Reflexionsschicht 60, eine erste Polarisatorschicht 63, eine zweite Polarisatorschicht 64, eine erste Ausrichtungsschicht 50, eine zweite Ausrichtungsschicht 51 und eine in ihrer optischen Wirkung elektrisch veränderbare Schicht 11 aufweist. Bezüglich der Elektrodenschichten 30 und 31, der Stützschicht 21, der Reflexionsschicht 60 und der Polarisatorschichten 63 und 64 ist hier auf obige Ausführungen verwiesen.

Die erste Elektrodenschicht 30, die erste Polarisatorschicht 63 und die erste Ausrichtungsschicht 50 sind hier als untere Schichten ausgebildet. Die zweite Elektrodenschicht 31, die zweite Polarisatorschicht 64 und die zweite Ausrichtungsschicht 51 sind hier als obere Schichten ausgebildet.

Die in ihrer optischen Wirkung elektrisch veränderbare Schicht 11 weist hier Flüssigkristalle 12 und stäbchenförmige Farbstoffmoleküle 13 auf. Die Flüssigkristalle 12 weisen elektrische Anisotropie und Doppelbrechung auf und vermögen die Polarisationsrichtung von polarisiertem Licht zu drehen. Die stäbchenförmigen Farbstoffmoleküle 13 verändern ihre Ausrichtungen der Längsachsen in Abhängigkeit von den Ausrichtungen der Längsachsen der räumlich benachbarten in dem elektrischen Feld ausrichtbaren Flüssigkristalle 12 wie oben beschrieben.

Die untere Ausrichtungsschicht 50 und die obere Ausrichtungsschicht 51 weisen jeweils eine Vorzugsrichtung auf. Beispielsweise werden die Oberflächen der Ausrichtungsschichten 50, 51 zur Erzeugung der jeweiligen Vorzugsrichtungen gebürstet. Zum Bürsten können beispielsweise Polystyrolschaum oder mit Textilen beschichtete Walzen verwendet werden. Durch den Bürstprozess entstehen weitgehend parallele Rillenstrukturen, welche die Vorzugsrichtung der Ausrichtungsschichten 50, 51 bestimmen. Die in Fig. 9a und Fig. 9c gezeigten Ausrichtungsschichten 50, 51 sind hier transparent ausgeführt. Weiter ist auch es auch möglich, dass beispielsweise die untere Ausrichtungsschicht 50 reflektiv ausgeführt ist. Ebenfalls sind die Polarisatorschichten 63, 64 sowie die obere Elektrodenschicht 31 in den Fig. 9a und Fig. 9c transparent ausgeführt.

Ohne eine angelegte Spannung und somit ohne ein elektrisches Feld zwischen Elektrodenschichten 30, 31 richten sich die Flüssigkristalle 12 mit ihrer Längsachse parallel zu den Rillen der Ausrichtungsschichten 50, 51 aus, wie in Fig. 9a gezeigt. Um diese Ausrichtung zu verbessern, ist es möglich, oberflächenaktive Stoffe wie beispielsweise Tenside, insbesondere Lecithine, Silane oder Polyimide zu verwenden. Hierdurch wird zum einen die Ausrichtung der Flüssigkristalle 12 gemäß der Vorzugsrichtungen der Ausrichtungsschichten 50, 51 verbessert und zum anderen eine mögliche Drehung der Flüssigkristalle 12, falls beispielsweise die Vorzugsrichtung der unteren Ausrichtungsschicht 50 um 90° gegenüber der Vorzugsrichtung der oberen Ausrichtungsschicht 51 gedreht ist, begünstigt. Allgemein ordnen sich die Längsachsen der Flüssigkristalle 12 in der Nähe der ersten Ausrichtungsschicht 50 gemäß der ersten Vorzugsrichtung an und in der Nähe der zweiten Ausrichtungsschicht 51 gemäß der zweiten Vorzugsrichtung an. In dem dazwischen liegenden Bereich drehen sich die Ausrichtungen der Längsachsen der Flüssigkristalle 12 kontinuierlich von der ersten Vorzugsrichtung zur zweiten Vorzugsrichtung. Da sich die Ausrichtung der Längsachsen der stäbchenförmigen Farbstoffmoleküle 13, welche die in ihrer optischen Wirkung veränderbaren Schicht 11 aufweist, mit der Ausrichtung der Längsachsen der Flüssigkristalle 12 verändert, folgen die stäbchenförmigen Farbstoffmoleküle 13 der Drehung der Flüssigkristalle 12 zwischen der ersten Ausrichtungsschicht und der zweiten Ausrichtungsschicht. Ohne angelegte Spannung richten sich die stäbchenförmigen Farbstoffmoleküle 13 wie in Fig. 9a gezeigt parallel zur Ebene des Sicherheitselementes aus. Das Sicherheitselement erscheint farbig.

Liegt hingegen an den Elektrodenschichten 30, 31 eine Spannung an und ist folglich ein elektrisches Feld in der in ihrer optischen Wirkung elektrisch veränderbaren Schicht 11 vorhanden, ordnen sich die Flüssigkristalle 12 und mit ihnen die Farbstoffmoleküle 13, wie in Fig. 9c dargestellt, in Abhängigkeit von dem Abstand zu den Ausrichtungsschichten 50, 51 und der angelegten Spannung parallel zu dem elektrischen Feld an. Je höher die angelegte Spannung, desto besser richten sich die Flüssigkristalle 12 parallel zu dem elektrischen Feld aus. Flüssigkristalle 12 in der Nähe der Ausrichtungsschichten 50, 51 benötigen hierzu eine größere Spannung als Flüssigkristalle 12, welche weiter entfernt von den Ausrichtungsschichten 50, 51 liegen, da die Flüssigkristalle in der Nähe der Ausrichtungsschichten 50, 51 auch eine Kraft zur Ausrichtung gemäß den Vorzugsrichtungen der Ausrichtungsschichten 50, 51 erfahren. Aufgrund der überwiegend senkrecht zur Ebene des Sicherheitselementes ausgerichteten stäbchenförmigen Farbstoffmoleküle 13 erscheint das Sicherheitselement weniger farbig oder fast farblos. Weiter hängt der Farbeindruck und die Farbintensität auch von der Ausrichtung der Polarisatorschichten 63, 64 ab.

Insbesondere die Ausgestaltungen der Polarisationsschichten 63, 64, der Ausrichtungsschichten 50, 51 und der in ihrer optischen Wirkung elektrisch veränderbaren Schicht 11 bestimmen, ob einfallendes Licht einer Lichtquelle 6 das Sicherheitselement 1 in Abhängigkeit einer möglichen angelegten Spannung passieren kann, und bestimmen somit den optischen Eindruck des Sicherheitselements auf einen Betrachter 5.

Im Folgenden werden Ausführungsvarianten eines Sicherheitselements 1 mit verschiedenen Ausgestaltungen der Polarisationsschichten 63 und 64, der Ausrichtungsschichten 50 und 51 und der in ihrer optischen Wirkung elektrisch veränderbaren Schicht 11 beschrieben.

Gemäß einer Ausführungsvariante des Sicherheitselements 1 ist die Vorzugsrichtung der unteren Ausrichtungsschicht 50 gegenüber der Vorzugsrichtung der oberen Ausrichtungsschicht 51 um 90° gedreht. Die obere Polarisatorschicht 64 und die untere Polarisatorschicht 63 polarisieren einfallendes Licht linear. Wird von der von der Unterseite des Sicherheitselements 1 aufgespannten Ebene ein Koordinatensystem mit den senkrecht zueinander stehenden Koordinatenachsen x und y aufgespannt, so liegt die Vorzugsrichtung der oberen Ausrichtungsschicht 51 parallel zur x-Achse und die Vorzugsrichtung der unteren Ausrichtungsschicht 50 parallel zur y-Achse. Die Transmissionsachsen der linearen Polarisatorschichten 63, 64 liegen dann parallel zur x-Achse.

Das von der Lichtquelle 6 einfallende Licht wird durch die obere Polarisatorschicht 64 linear in x-Richtung polarisiert. Die Polarisationsrichtungen bleiben nach Durchtritt durch die Ausrichtungsschichten 50, 51 erhalten.

Wie oben beschrieben vermögen die Flüssigkristalle 12 die Polarisationsrichtung zu drehen, so dass im spannungslosen Zustand nach Durchtritt durch die in ihrer optischen Wirkung veränderbare Schicht 11 die Polarisationsrichtung des Lichts um 90° gedreht ist. Die stäbchenförmigen Farbstoffmoleküle 13, welche sich mit ihren Längsachsen in Richtung der Längsachsen der Flüssigkristalle 12 ausrichten, absorbieren hierbei wie oben beschrieben Licht und erzeugen beispielsweise eine gelbe Farbe. Nach Durchtritt durch die untere Ausrichtungsschicht 50 ist die Polarisationsrichtung des Lichts weiterhin um 90° gedreht und ist so linear in y-Richtung polarisiert. Das linear in y-Richtung polarisierte Licht wird von der unteren Polarisationsschicht 63 absorbiert, da die Transmissionsachsen der unteren Polarisatorschicht 63 parallel zur x-Achse liegen.

Das Sicherheitselement 1 erscheint somit dem Betrachter 5 opak in der von der den stäbchenförmigen Farbstoffmolekülen 13 bestimmten gelben Farbe, wie in Fig. 9b gezeigt.

Liegt nun eine Spannung an den Elektrodenschichten 30, 31 an, richten sich die Flüssigkristalle 12 und entsprechend die stäbchenförmigen Farbstoffmoleküle 13 wie oben beschrieben parallel zum elektrischen Feld aus. Das nach Durchtritt durch die obere Polarisatorschicht 64 in x-Richtung linear polarisierte Licht kann nun bis zur Reflexionsschicht 60 hindurchtreten, da es die untere Polarisationsschicht 63, bei welcher die Transmissionsachsen parallel zur x-Achse liegen, passieren kann. Das Licht wird an der Reflexionsschicht 60 reflektiert und kann die Polarisationsschichten 63 und 64, die Ausrichtungsschichten 50, 51 und die in ihrer optischen Wirkung elektrisch veränderbare Schicht 11 erneut passieren.

Somit erscheint das Sicherheitselement 1 einem Betrachter 5 transparent bis auf den von der Stützschicht 21 gebildeten Rahmen 22, wie in Fig. 9d gezeigt. Der Betrachter 5 sieht bei angelegter Spannung folglich die Reflexionsschicht 60 oder Effekte von Mikrostrukturen, welche in eine mit der Reflexionsschicht 60 versehenen Replizierlackschicht abgeformt sind.

Gemäß einer weiteren Ausführungsvariante des Sicherheitselements 1 weist die Vorzugsrichtung der unteren Ausrichtungsschicht 50 und die Vorzugsrichtung der oberen Ausrichtungsschicht 51 dieselbe Orientierung in Richtung der x-Achse auf. Die obere Polarisatorschicht 64 und die untere Polarisatorschicht 63 polarisieren einfallendes Licht linear, und die Transmissionsachsen der linearen Polarisatorschichten 63, 64 liegen parallel zu einer um 45° geneigten Richtung gegenüber der x-Achse. Die Schichtdicke der in ihrer optischen Wirkung elektrisch veränderbaren Schicht 11 entspricht hier der eines λ/2-Plättchens.

Das von der Lichtquelle 6 einfallende Licht wird durch die obere Polarisatorschicht 64 linear in einer um 45° geneigten Richtung gegenüber der x-Achse geneigten Richtung polarisiert. Die Polarisationsrichtungen bleiben nach Durchtritt durch die Ausrichtungsschichten 50, 51 erhalten.

Ist keine Spannung an die Elektroden 30, 31 angelegt, wird die Polarisationsrichtung des einfallenden Lichtes durch die in ihrer optischen Wirkung elektrisch veränderbare Schicht 11 aufgrund ihrer Schichtdicke derart gedreht, dass das Licht nach Durchtritt durch die in ihrer optischen Wirkung elektrisch veränderbare Schicht 11 linear in einer um 135° geneigten Richtung gegenüber der x-Achse polarisiert ist. Derart polarisiertes Licht wird von der unteren Polarisationsschicht 63 absorbiert, da die Transmissionsachsen der unteren Polarisatorschicht 63 parallel zu einer um 45° geneigten Richtung gegenüber der x-Achse liegen. Das Sicherheitselement 1 erscheint somit dem Betrachter 5 opak in einer von den stäbchenförmigen Farbstoffmolekülen 13 bestimmten Farbe, da Licht die Schichten des Sicherheitselements 1 nicht passieren kann und die stäbchenförmigen Farbstoffmoleküle 13 das einfallende Licht absorbieren.

Liegt nun eine Spannung an den Elektrodenschichten 30, 31 an, richten sich die Flüssigkristalle 12 und entsprechend die stäbchenförmigen Farbstoffmoleküle 13 wie oben beschrieben parallel zum elektrischen Feld aus, so dass die Flüssigkristallmoleküle der in ihrer optischen Wirkung elektrisch veränderbaren Schicht 11 die Polarisationsrichtung des Lichts nicht um 90° drehen und weiter die stäbchenförmigen Farbstoffmoleküle 13 aufgrund ihrer Ausrichtung nur eine minimale Absorption aufweisen. Das Sicherheitselement 1 erscheint somit dem Betrachter 5 transparent, da einfallendes Licht die Schichten des Sicherheitselements passieren kann und die stäbchenförmigen Farbstoffmoleküle das einfallende Licht kaum absorbieren.

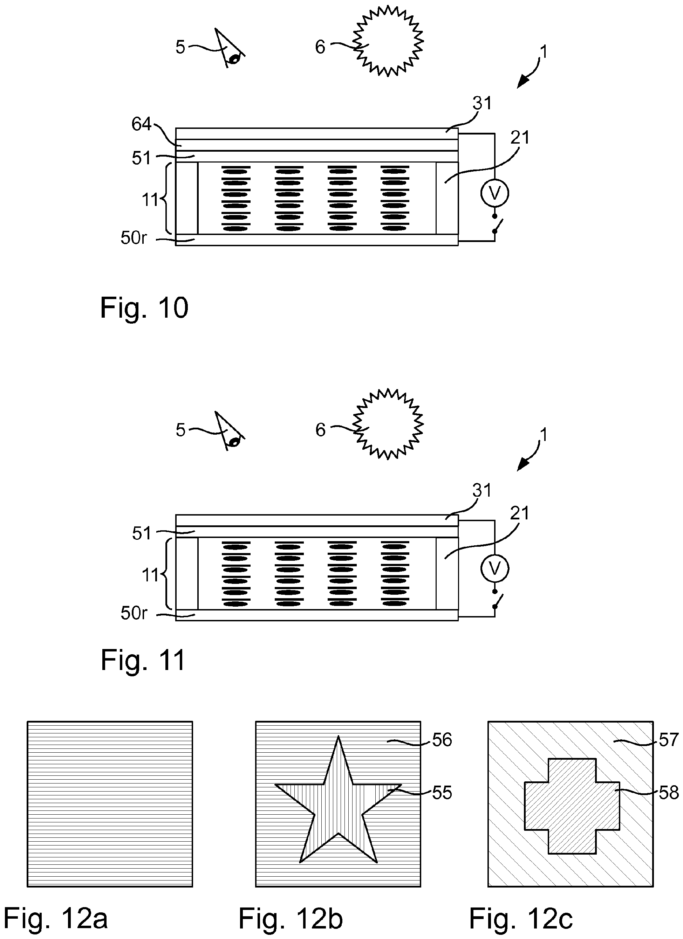

Fig. 10 zeigt ein weiteres bevorzugtes Ausführungsbeispiel eines erfindungsgemäßen Sicherheitselements 1, welches eine leitfähige, reflektive erste Ausrichtungsschicht 50r, eine zweite Elektrodenschicht 31, eine Stützschicht 21, eine zweite Polarisatorschicht 64, eine zweite Ausrichtungsschicht 51 und eine in ihrer optischen Wirkung elektrisch veränderbare Schicht 11 aufweist. Bezüglich der Schichten 31, 64, 51 und 21 ist hier auf obige Ausführungen verwiesen.

Die erste Ausrichtungsschicht 50r weist eine diffraktive Reliefstruktur auf. Bei der diffraktiven Reliefstruktur handelt es sich bevorzugt um eine hochfrequente, insbesondere sinusförmige Reliefstruktur mit einer Gitterperiode zwischen 190 nm und 500 nm, bevorzugt 300 bis 420 nm, und einer Gittertiefe von 50 nm bis 500 nm, bevorzugt 80 nm bis 250 nm. Derartige hochfrequente Reliefstrukturen werden auch Subwellenlängengitter bzw. Beugungsstrukturen Nullter Ordnung genannt. Es hat sich überraschenderweise gezeigt, dass sich die Längsachsen der Flüssigkristalle ebenfalls an diffraktiven Reliefstrukturen ausrichten. Da sich die Ausrichtung der Längsachsen der stäbchenförmigen Farbstoffmoleküle 13 mit der Ausrichtung der Längsachsen der Flüssigkristalle 12 verändert, folgen die stäbchenförmigen Farbstoffmoleküle 13 der Ausrichtung der Flüssigkristalle 12. Weiter vermögen derartige Reliefstrukturen, Licht ähnlich einem Polarisator zu polarisieren, insbesondere wenn derartige Reliefstrukturen mit einer Metallschicht versehen sind. Daher ist die erste Ausrichtungsschicht 50r reflektiv ausgeführt. So ist es beispielsweise möglich, dass die erste Ausrichtungsrichtungsschicht 50r mehrschichtig ausgebildet ist. Beispielsweise kann die erste Ausrichtungsschicht aus einer Replizierlackschicht bestehen, in welche die diffraktive Reliefstruktur abgeformt ist, und eine Metallisierung aufweisen, welche zum einen den leitfähigen Teil der ersten Ausrichtungsschicht 50r und zum anderen die Reflektivität der ersten Ausrichtungsschicht 50r erzielt.

Die Schichtdicke der in ihrer optischen Wirkung elektrisch veränderbaren Schicht 11 entspricht hier der eines A/4-Plättchens, so dass die in ihrer optischen Wirkung elektrisch veränderbare Schicht 11 im spannungslosen Zustand des Sicherheitselements 1 linear polarisiertes Licht ähnlich einem λ/4-Plättchen in zirkular polarisiertes Licht ändert. Wird so beispielsweise das von der Lichtquelle 6 einfallende Licht durch die obere bzw. zweite Polarisatorschicht 64 linear in einer um 45° gegenüber der x-Achse geneigten Richtung polarisiert, weist dieses nach Durchtritt durch die in ihrer optischen Wirkung elektrisch veränderbare Schicht 11 eine linkszirkulare Polarisation auf, welche durch Reflexion an der ersten Ausrichtungsschicht 50r zu rechtszirkular wechselt. Nach erneutem Durchtritt durch die in ihrer optischen Wirkung elektrisch veränderbare Schicht 11 ist das Licht wieder linear polarisiert und die Polarisationsrichtung nun insgesamt um 90° gegenüber der ursprünglichen um 45° geneigten Richtung gegenüber der x-Achse geneigten Richtung polarisiert und wird somit durch die zweite Polarisatorschicht 64 absorbiert. Das Sicherheitselement 1 erscheint somit für einen Betrachter 5 opak.

Liegt nun eine Spannung an den Schichten 31 und 50r an, richten sich die Flüssigkristalle 12 und entsprechend die stäbchenförmigen Farbstoffmoleküle 13 wie oben beschrieben parallel zum elektrischen Feld aus, so dass die Flüssigkristallmoleküle 12 der in ihrer optischen Wirkung elektrisch veränderbaren Schicht 11 die Polarisationsrichtung des Lichts nicht ändern und weiter die stäbchenförmigen Farbstoffmoleküle 13 aufgrund ihrer Ausrichtung nur eine minimale Absorption aufweisen. Einfallendes Licht kann somit die Schichten 31, 64, 51, und 11 des Sicherheitselement 1 passieren und wird an der ersten Ausrichtungsschicht 50r reflektiert. Ein Betrachter kann somit die von der sinusförmigen Reliefstruktur der ersten Ausrichtungsschicht 50r erzeugten optischen Effekte erkennen.

Fig. 11 zeigt ein weiteres bevorzugtes Ausführungsbeispiel eines erfindungsgemäßen Sicherheitselements 1, welches eine leitfähige, reflektive erste Ausrichtungsschicht 50r, eine zweite Elektrodenschicht 31, eine Stützschicht 21, eine zweite Ausrichtungsschicht 51 und eine in ihrer optischen Wirkung elektrisch veränderbare Schicht 11 aufweist. Bezüglich der Schichten 31, 51, 21, 11 und 50r ist hier auf obige Ausführungen verwiesen.

Das Sicherheitselements der Fig. 11 weist somit im Vergleich zu dem Sicherheitselement der Fig. 10 keine obere bzw. zweite Polarisationsschicht auf.

Im spannungslosen Zustand richten sich wie oben beschrieben die Flüssigkristalle 12 mit ihrer Längsachse und somit ebenfalls die stäbchenförmigen Farbstoffmoleküle 13 parallel zu den Rillenstrukturen der Ausrichtungsschichten 51, 50r aus. Wie oben beschrieben weisen die stäbchenförmigen Farbstoffmoleküle 13 in dieser Ausrichtung ihre maximale Absorption auf.

Liegt nun eine Spannung an den Schichten 31 und 50r an, richten sich die Flüssigkristalle 12 und entsprechend die stäbchenförmigen Farbstoffmoleküle 13 wie oben beschrieben parallel zum elektrischen Feld aus und die Absorption der stäbchenförmigen Farbstoffmoleküle 13 ist wie oben beschrieben minimal. Ein Betrachter kann somit die von der sinusförmigen Reliefstruktur der ersten Ausrichtungsschicht 50r erzeugten optischen Effekte erkennen.

Fig. 12a bis Fig. 12c zeigen Draufsichten auf Ausgestaltungsvarianten von Ausrichtungsschichten eines Sicherheitselements 1. So zeigt Fig. 12a eine erste oder auch untere Ausrichtungsschicht, die eine sinusförmige Reliefstruktur, insbesondere ein Beugungsstruktur Nullter Ordnung, aufweist. Fig. 12b zeigt eine untere Ausrichtungsschicht, die in dem Bereich 56 sinusförmige Reliefstruktur mit einer Gitterperiode von 250 nm aufweist und in dem sternförmigen Bereich 55 eine sinusförmige Reliefstruktur mit einer Gitterperiode von ebenfalls 250 nm aufweist. Der Azimutwinkel der sinusförmigen Reliefstruktur im Bereich 55 ist hierbei um 90° gegenüber dem Azimutwinkel der sinusförmigen Reliefstruktur im Bereich 56 gedreht. Fig. 12c zeigt eine untere Ausrichtungsschicht, die im Bereich 57 eine sinusförmige Reliefstruktur aufweist, welche sich von der sinusförmigen Reliefstruktur im kreuzförmigen Bereich 58 durch die Gitterperiode, die Gittertiefe und den Azimutwinkel unterscheidet.

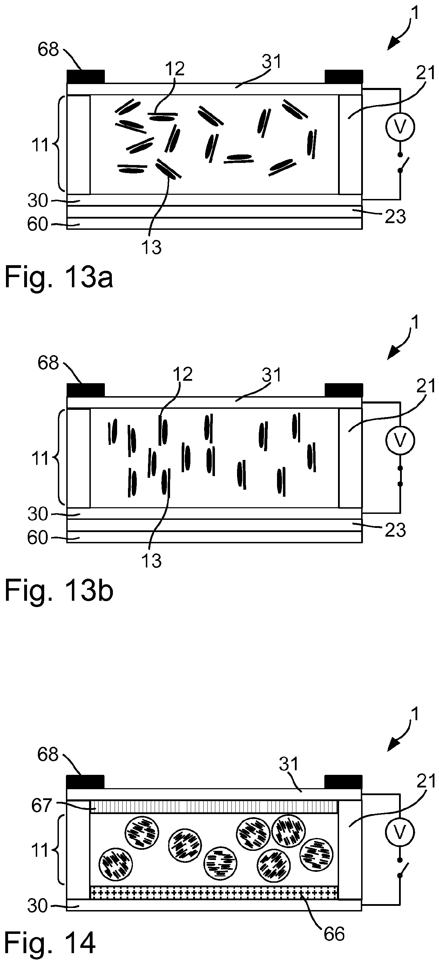

Fig. 13a und Fig. 13b zeigen ein weiteres bevorzugtes Ausführungsbeispiel eines erfindungsgemäßen Sicherheitselements 1, welches eine Reflexionsschicht 60, eine erste Elektrodenschicht 30, eine zweite Elektrodenschicht 31, eine Stützschicht 21, eine Hilfsschicht 23, eine Effektschicht 68 und eine in ihrer optischen Wirkung elektrisch veränderbare Schicht 11 aufweist. Bezüglich der Schichten 68, 31, 21, 11, 30, 23 und 60 ist hier auf obige Ausführungen verwiesen.

Da das Sicherheitselement 1 in Fig. 13a und Fig. 13b keine Ausrichtungsschichten enthält, weisen die Flüssigkristalle 12 und damit auch die stäbchenförmigen Farbstoffelemente 13 im spannungslosen Zustand eine isotrope Ausrichtung auf, d. h. die stäbchenförmigen Farbstoffelemente 13 weisen keine einheitliche Richtung auf und sind somit zufällig angeordnet. In diesem Zustand erscheint die in ihrer optischen Wirkung elektrisch veränderbare Schicht 11 opak in einer von den stäbchenförmigen Farbstoffmolekülen 13 bestimmten Farbe.

Wird hingegen eine Spannung an die Elektrodenschichten 30, 31 angelegt, richten sich die Flüssigkristalle 12 und entsprechend die stäbchenförmigen Farbstoffmoleküle 13 wie oben beschrieben parallel zum elektrischen Feld aus und die Absorption der stäbchenförmigen Farbstoffmoleküle 13 ist wie oben beschrieben minimal. Die in ihrer optischen Wirkung elektrisch veränderbare Schicht 11 erscheint in einem transparenten Zustand.

Fig. 14 zeigt ein weiteres bevorzugtes Ausführungsbeispiel eines erfindungsgemäßen Sicherheitselements 1, welches die optionalen Farbschichten 66 und 67 aufweist. Bezüglich der Schichten 30, 31, 21, 11, und 68 ist hier auf obige Ausführungen verwiesen.

Die Farbschichten 66, 67 überlappen hierbei die in ihrer optischen Wirkung elektrisch veränderbare Schicht 11 zumindest teilweise. Weiter ist zumindest ein Teil der in ihrer optischen Wirkung elektrisch veränderbaren Schicht 11 zwischen den Farbschichten 66, 67 angeordnet. Weiter ist es möglich, dass die Farbschichten unterschiedlich eingefärbt sind, so kann beispielsweise die Farbschicht 66 grün eingefärbt sein und die Farbschicht 67 rot eingefärbt sein. Weiter ist es möglich, dass die Farbschichten 66, 67 ein Muster mit unterschiedlich gefärbten Musterelementen ausbilden. So kann beispielsweise die Farbschicht 67 ein Muster in Form eines Bildes, wie beispielsweise eines Sterns, aufweisen, wobei die Farbschicht 67 im Bereich des Sterns blau gefärbt ist.

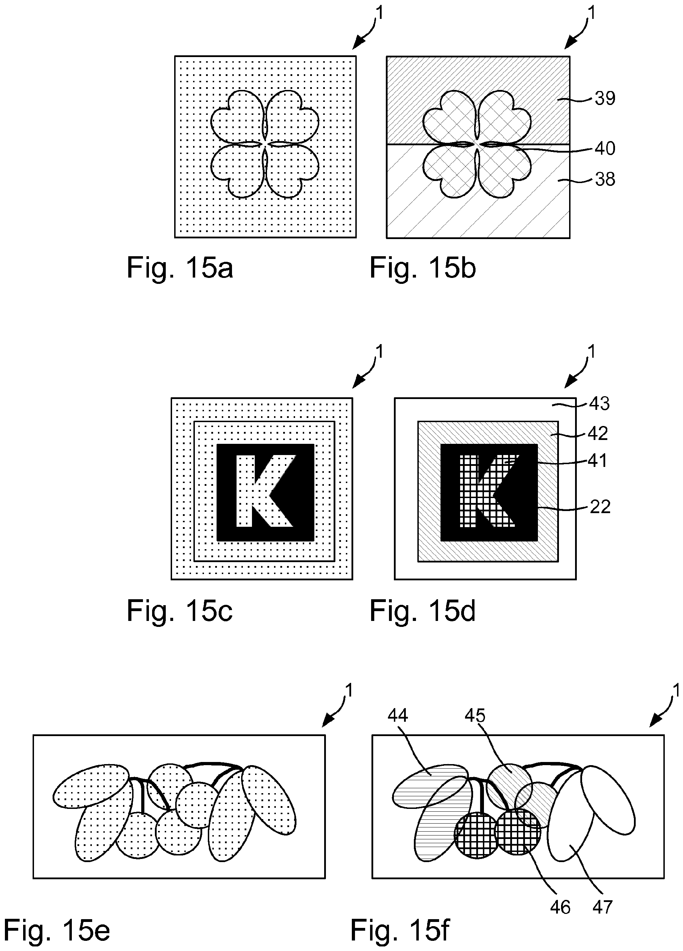

Fig. 15a bis Fig. 15f zeigen Draufsichten auf Sicherheitselemente 1 zur Verdeutlichung der optischen Wirkung der erfindungsgemäßen Sicherheitselemente. Fig. 15a, Fig. 15c und Fig. 15e zeigen jeweils Draufsichten auf die Sicherheitselemente 1 im opaken Zustand der in ihrer optischen Wirkung elektrisch veränderbaren Schicht 11. Die Fig. 15b, Fig. 15d und Fig. 15f zeigen die Draufsichten auf die Sicherheitselemente 1 im transparenten Zustand der in ihrer optischen Wirkung elektrisch veränderbaren Schicht 11. So sind die Sicherheitselemente der Fig. 15a bis Fig. 15f derart ausgestaltet, dass diese im opaken Zustand der in ihrer optischen Wirkung elektrisch veränderbaren Schicht für einen Betrachter alle ein milchiges, trübes und gleichzeitig farbiges Erscheinungsbild aufweisen. Im transparenten Zustand der in ihrer optischen Wirkung elektrisch veränderbaren Schicht hingegen, werden für den Betrachter jedoch zusätzliche Farbeffekte erkennbar, wie in den Fig. 15b, Fig. 15d und Fig. 15f gezeigt. Diese zusätzlichen Farbeffekte sind im opaken Zustand der Fig. 15a, 15c, 15e allenfalls schemenhaft oder gar nicht erkennbar. So zeigt beispielsweise das Sicherheitselement 1 der Fig. 15b in den Bereichen 38, 39 und 40 unterschiedliche Farbeffekte, welche wie oben beschrieben von unterschiedlichen Mikrostrukturen, welche die erste Elektrodenschicht aufweist, erzeugt werden. So ist es beispielsweise möglich, dass der Bereich 39 einem Betrachter rot erscheint, der Bereich 38 einem Betrachter blau erscheint und der Bereich 40 ein Hologramm aufweist, welches einem Betrachter im opaken Zustand verborgen bleibt. Die Fig. 15d zeigt ein Sicherheitselement 1, welches einen Rahmen 22 aufweist, der den Buchstaben "K" bildet, wobei der Bereich 41 des Buchstabens "K" einem Betrachter rot erscheint, der Bereich 42 einem Betrachter blau erscheint und der Bereich 43 transparent ist. Der Rahmen 22 hingegen erscheint dunkel bzw. schwarz und ist selbst im opaken Zustand als dunklerer Bereich zu erkennen, wie in Fig. 15c dargestellt. Die Fig. 15f zeigt ein Sicherheitselement 1, welches in den Bereichen 45, 46 Früchte und in den Bereichen 44, 47 Blätter darstellt. In den Bereichen 44, 45, 46 und 47 werden hierbei beispielsweise für einen Betrachter unterschiedliche optische Effekte erzeugt, da die untere Elektrodenschicht des Sicherheitselements 1 diesen Bereichen unterschiedliche Mikrostrukturen aufweist.

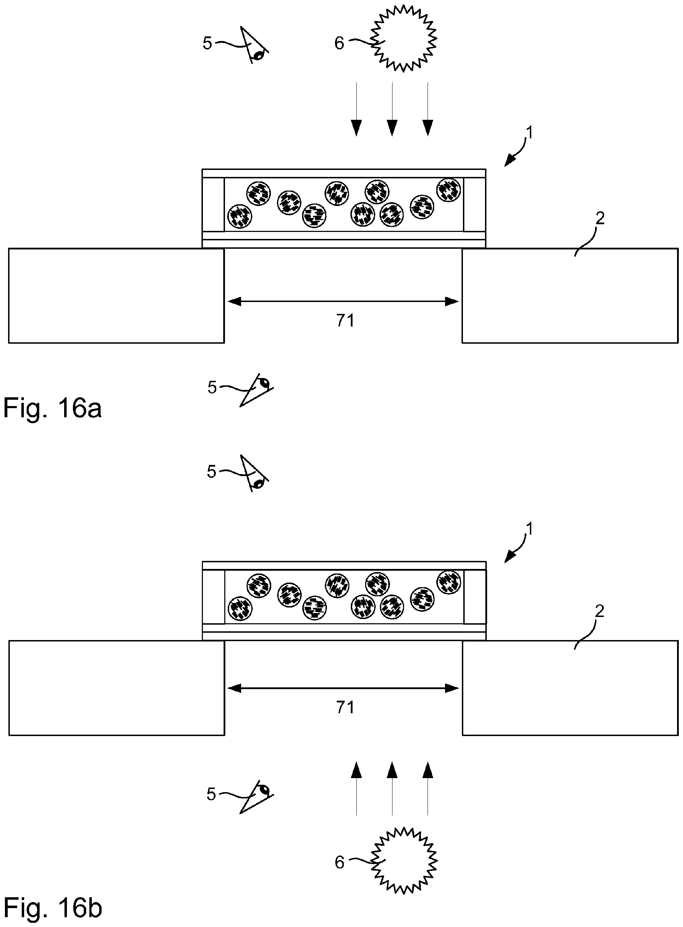

Fig. 16a und Fig. 16b zeigen ein weiteres Ausführungsbeispiel, bei dem ein Sicherheitselement 1 über einem das Substrat eines Sicherheitsdokuments 2 vorzugsweise vollständig durchdringenden Fenster 71 angeordnet ist. Auf diese Weise kann das Sicherheitsdokument 1 von beiden Seiten betrachtet werden, und zwar sowohl im Auflicht als auch im Durchlicht. Bei dem Sicherheitsdokument 2 kann es sich beispielsweise um eine Banknote handeln. Das Fenster 71 kann beispielsweise ein ausgestanztes Loch in einer Papierbanknote oder einer Passbuchseite sein. Dabei ist es möglich, dass ein Betrachter 5 das Sicherheitsdokument 2 und das auf dem Sicherheitsdokument 2 aufgebrachte Sicherheitselement 1 sowohl in Auflicht als auch in Durchlicht von der Vorderseite des Sicherheitsdokuments 2 oder sowohl in Auflicht als auch in Durchlicht von der Rückseite des Sicherheitsdokuments 2, wie in den Fig. 16a und 16b gezeigt, betrachtet.

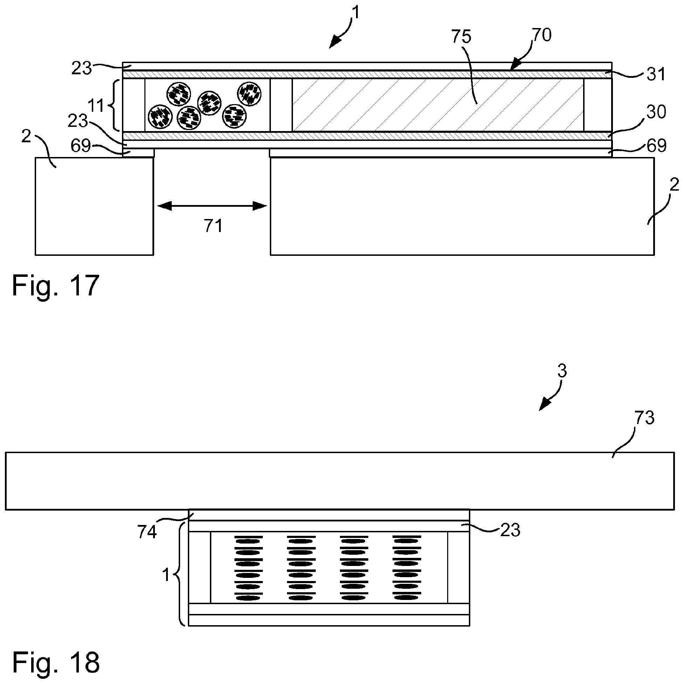

Fig. 17 zeigt ein Sicherheitsdokument 2, z. B. eine Papierbanknote, in dem eine das Papiersubstrat des Sicherheitsdokuments 2 vorzugsweise vollständig durchdringende Fensteröffnung 71 ausgebildet ist, z. B. durch Ausstanzen. Das Sicherheitsdokument 2 weist eine Dicke von maximal 1000 µm, insbesondere eine Dicke im Bereich von 20 bis 200 µm, hierbei bevorzugt im Bereich von 50 bis 140 µm, auf.
Auf einer Seite des Sicherheitsdokuments 2 ist, z. B. mittels einer Klebstoffschicht 69, ein Sicherheitselement 1 fixiert, welches eine piezoelektrische Energiequelle 70 umfasst. Die in ihrer optischen Wirkung elektrisch veränderbare Schicht 11 des Sicherheitselements 1 ist so angeordnet, dass diese die Fensteröffnung 71 verschließt. Die piezoelektrische Energiequelle 70 enthält eine Schicht 75 aus piezoelektrischem Material, z. B. PVDF (= Polyvinylidenfluorid), an dessen beiden Seiten je eine Elektrodenschicht 30, 31 anliegt.

Die Elektrodenschichten 30, 31 weisen eine Schichtdicke im Bereich von 1 nm bis 500 nm, vorzugsweise im Bereich von 10 nm bis 200 nm, auf. Dabei können die Elektrodenschichten 30, 31 opak oder zumindest lokal transparent ausgebildet sein. Zur Bildung der Elektrodenschichten 30, 31 haben sich Metalle oder Metall-Legierungen, wie Aluminium, Silber, Gold, Chrom, Kupfer und dergleichen, leitfähige nichtmetallisch anorganische Materialien wie ITO und dergleichen, Kohlenstoffnanoröhrchen, Graphen und leitfähige Polymere, wie PEDOT (= Poly(3,4-ethylendioxythiophen)), PANI (= Polyanilin), und dergleichen bewährt.

Die Bildung der Elektrodenschichten 30, 31 erfolgt insbesondere bei Bildung metallischer oder nichtmetallisch anorganischer Elektrodenschichten 30, 31 bevorzugt durch Aufdampfen oder Sputtern, oder insbesondere bei der Bildung polymerer Elektrodenschichten 30, 31 durch gängige Druckverfahren, wie Siebdruck, Inkjet-Druck, Hochdruck, Tiefdruck oder ein Aufrakeln. Aber auch die Verwendung einer Transferfolie zur Bildung von Elektrodenschichten 30, 31 mittels Heiß- oder Kaltprägens ist möglich.

Diese Elektrodenschichten 30, 31 bilden eine elektrisch leitfähige Verbindung durch das Sicherheitselement 1 hindurch bis zu der in ihrer optischen Wirkung elektrisch veränderbaren Schicht 11.

Zu den Außenseiten hin ist das Sicherheitselement 1 von einer transparenten Hilfsschicht 23 überzogen. Bei der Hilfsschicht 23 handelt es sich vorzugsweise um eine Schutzschicht. Die Schutzschicht ist vorzugsweise als Trägerfilm, welcher selbsttragend ist, oder als Schutzlackschicht, welche aufgrund ihrer geringen Schichtdicke nicht selbsttragend ist, ausgebildet. Die Schutzschicht ist vorzugsweise farblos oder farbig transparent ausgebildet. Die Schutzschicht ist insbesondere aus PET, PEN (= Polyethylennaphthalat), PE (= Polyethylen), PI = (Polyimid), PP (= Polypropylen), PC oder PTFE (= Polytetrafluorethylen) gebildet. Weiter ist es möglich, dass es sich bei der Hilfsschicht 23 um eine höhenausgleichende Nivellierschicht handelt, welche insbesondere zwischen Sicherheitselement 1 und Sicherheitsdokument 2 angebracht ist.

Es hat sich bewährt, wenn als piezoelektrisches Material ein Polymer, insbesondere vom Typ Polyvinylidenfluorid (= PVDF), eingesetzt wird. Aber auch andere piezoelektrische Materialien, wie Polyamide, Polyurethane, Fluorpolymere und insbesondere davon abgeleitete Copolymere sowie ferroelektrische Flüssigkristallelastomere sind verwendbar. Weitere mögliche piezoelektrische Materialien sind druckbare Kompositmaterialien aus piezoelektrischen Partikeln z. B. aus Blei-Zirkonat-Titanat (PZT) oder Zinkoxid (ZnO), eingebettet in eine organische Matrix oder auch anorganische piezoelektrische Materialien wie PZT-Schichten oder ZnO Nanodraht-Arrays, welche auf ein flexibles Trägermaterial übertragen werden, z. B. via Laser-Liftoff. Die Schicht aus piezoelektrischem Material 75 weist vorzugsweise eine Schichtdicke von maximal 200 µm, bevorzugt von maximal 50 µm, weiter bevorzugt maximal 25 µm auf. Für ID-Dokumente wie eine Polycarbonat-(PC)-Passkarte haben sich Schichtdicken im Bereich bis 200 µm, bevorzugt bis 100 µm, als praktikabel erwiesen. Derart dünne Schichten aus piezoelektrischem Material sind insbesondere durch Drucken in einem oder mehreren Durchgängen herstellbar, wobei die Fähigkeit zur Erzeugung einer elektrischen Spannung beim Aufbringen einer Biegebelastung überraschender Weise erhalten bleibt, wenn eine geeignete Steifigkeit vorhanden ist.

Besonders bevorzugt ist es, wenn die in ihrer optischen Wirkung elektrisch veränderbare Schicht 11 unter Einwirkung des elektrischen Feldes, das durch die piezoelektrische Energiequelle 70 durch Biegen derselben zwischen der ersten und der zweiten Elektrodenschicht 30, 31 erzeugt wird, transparent oder opak wird. Die Energiequelle 70 kann aber nicht nur durch Biegen, sondern auch thermisch über einen Temperaturgradienten, der über die Schicht aus piezoelektrischem Material 75 angelegt wird, aktiviert werden.

Durch die Aktivierung der Energiequelle 70 können im Sicherheitselement 1 wechselnde optische Effekte, wie oben beschrieben, hervorgerufen werden. Das Auslesen dieser optischen Informationen erfolgt insbesondere visuell und ohne weitere Hilfsmittel.

Fig. 18 zeigt eine Transferfolie 3. Es hat sich bewährt, wenn das Sicherheitselement 1 auf einer Transferfolie 73 bereitgestellt wird, so dass eine Applikation des Sicherheitselements 1 auf ein Sicherheitsdokument 2 mittels Prägens erfolgen kann. Eine solche Transferfolie 3 weist mindestens ein erfindungsgemäßes Sicherheitselement 1 auf, wobei das mindestens eine Sicherheitselement 1 auf einer Trägerfolie 73 der Transferfolie 3 angeordnet ist und von dieser ablösbar ist.

Ausgehend von der Trägerfolie 73 der Transferfolie 3 ist hier üblicherweise eine Ablöseschicht 74 vorhanden, um das Sicherheitselement 1 nach dem Prägen von der Trägerfolie 73 der Transferfolie 3 lösen zu können. Auf einer der Trägerfolie 73 der Transferfolie 3 abgewandten Seite der Ablöseschicht 74 ist vorzugsweise die als Schutzlackschicht ausgebildete optionale transparente Schutzschicht 23 und weiterhin der übrige Aufbau des Sicherheitselements 1 vorhanden.

Das Sicherheitselement 1 kann mittels einer Klebstoffschicht 69, insbesondere aus einem Kalt- oder Heißkleber, am Sicherheitsdokument 2 fixiert werden. Die Klebstoffschicht 69 kann aber auch bereits durch einen Trägerfilm gebildet sein, der an das Sicherheitselement 1 angrenzt.

### Bezugszeichenliste

- 1: Sicherheitselement
- 2: Sicherheitsdokument
- 3: Transferfolie
- 5: Beobachter
- 6: Lichtquelle
- 11: in ihrer optischen Wirkung elektrisch veränderbare Schicht
- 12: Flüssigkristalle
- 13: stäbchenförmige Farbstoffmoleküle
- 14, 15: Achsen der stäbchenförmigen Farbstoffmolekühle
- 17, 16: Achsen der Flüssigkristalle
- 19: Sphären
- 21: Stützschicht
- 22: Rahmen
- 23: Hilfsschicht
- 26,27: Zonen
- 30, 31, 30m, 31m: Elektrodenschichten
- 37, 33, 35, 36, 55, 56, 57, 58: Bereiche
- 24, 38, 39, 40, 41, 42, 43: Teilbereiche
- 50, 51, 50r: Ausrichtungsschichten
- 60: Reflexionsschicht
- 63, 64: Polarisatorschichten
- 66, 67: Farbfilterschichten
- 68: Effektschicht
- 69: Klebstoffschicht
- 70: Energiequelle
- 71: Fenster
- 73: Trägerfolie
- 74: Ablöseschicht
- 75: Schicht aus piezoelektrischem Material

## Patentansprüche

1. Sicherheitselement (1) zur Kennzeichnung eines Sicherheitsdokuments (2), insbesondere einer Banknote oder eines ID-Dokuments, mit einer Oberseite (10) und einer Unterseite (20), wobei das Sicherheitselement mindestens eine in ihrer optischen Wirkung elektrisch veränderbare Schicht (11) aufweist,
wobei die mindestens eine in ihrer optischen Wirkung elektrisch veränderbare Schicht (11) in einem elektrischen Feld ausrichtbare Flüssigkristalle (12) aufweist, wobei
a) die mindestens eine in ihrer optischen Wirkung elektrisch veränderbare Schicht (11) weiter stäbchenförmige Farbstoffmoleküle (13) aufweist, und die Ausrichtungen der Längsachsen (14) der stäbchenförmigen Farbstoffmolekühle (13) in Abhängigkeit von den Ausrichtungen der Längsachsen (16) der räumlich benachbarten in dem elektrischen Feld ausrichtbaren Flüssigkristalle (12) veränderbar sind, und wobei die Konzentration der stäbchenförmigen Farbstoffmoleküle (13) in der mindestens einen in ihrer optischen Wirkung elektrisch veränderbaren Schicht (11) zwischen 0,05 Gewichtsprozent und 4 Gewichtsprozent beträgt, und/oder
b) die in dem elektrischen Feld ausrichtbaren Flüssigkristalle (12) derart ausgebildet sind, dass die in dem elektrischen Feld ausrichtbaren Flüssigkristalle (12) gleichzeitig als Farbstoffmoleküle wirken.

2. Sicherheitselement (1) nach Anspruch 1, **dadurch gekennzeichnet,**
**dass** die Ausrichtungseffizienz der Längsachsen (14) der stäbchenförmigen Farbstoffmoleküle (13) bezogen auf die Längsachsen (16) der in dem elektrischen Feld ausrichtbaren Flüssigkristalle (12) zwischen 50 % und 100 %, bevorzugt zwischen 70 % und 100%, beträgt.

3. Sicherheitselement (1) nach einem der vorhergehenden Ansprüche, **dadurch gekennzeichnet,**
**dass** die stäbchenförmigen Farbstoffmoleküle (13) lösliche, nicht-ionische, chemisch, photochemisch und/oder elektrochemisch stabile Farbstoffmoleküle sind und/oder dass die stäbchenförmigen Farbstoffmoleküle (13) konjugierte Farbstoffmoleküle, vorzugsweise konjugierte, aromatische Farbstoffmoleküle, sind.

4. Sicherheitselement (1) nach einem der vorhergehenden Ansprüche, **dadurch gekennzeichnet,**
**dass** die stäbchenförmigen Farbstoffmoleküle (13) zumindest ein auf einem Anthrachinonfarbstoff und/oder einem Azofarbstoff basierendes Molekül aufweisen und/oder dass die Konzentration der stäbchenförmigen Farbstoffmoleküle (13) in der mindestens einen in ihrer optischen Wirkung elektrisch veränderbaren Schicht (11) zwischen 0,15 Gewichtsprozent und 2,0 Gewichtsprozent beträgt und/oder dass die stäbchenförmigen Farbstoffmoleküle (13) Licht in einem für das menschliche Auge sichtbaren Wellenlängenbereich, bevorzugt im Wellenlängenbereich von 380 nm bis 780 nm, weiter bevorzugt im Wellenlängenbereich von 430 nm bis 690 nm, welches senkrecht auf die Längsachse (14) der stäbchenförmigen Farbstoffmoleküle (13) auftrifft, stärker absorbieren als Licht, welches parallel zur Längsachse (14) der stäbchenförmigen Farbstoffmoleküle (13) auftrifft.

5. Sicherheitselement (1) nach einem der vorgehenden Ansprüche,
**dadurch gekennzeichnet,**
**dass** das Sicherheitselement eine Stützschicht (21) aufweist, wobei bevorzugt die Stützschicht (21) senkrecht zu der von der Unterseite (20) des Sicherheitselements aufgespannten Ebene gesehen zumindest teilweise einen Rahmen (22) um die mindestens eine in ihrer optischen Wirkung elektrisch veränderbare Schicht (11) bildet, welcher die mindestens eine in ihrer optischen Wirkung elektrisch veränderbare Schicht mechanisch verstärkt, und bevorzugt der Rahmen (22) ein visuell erkennbares Designelement bildet.

6. Sicherheitselement (1) nach dem vorangehenden Anspruch,
**dadurch gekennzeichnet,**
**dass** die Stützschicht (21) in einer oder mehreren ersten Zonen (26) vorhanden ist und in einer oder mehreren zweiten Zonen (27) nicht vorhanden ist, wobei die Stützschicht (21) in den ein oder mehreren ersten Zonen (26) eine Höhe (28) zwischen 1 µm und 50 µm, bevorzugt zwischen 2 µm und 30 µm, weiter bevorzugt zwischen 3 µm und 20 µm, aufweist, wobei bevorzugt der Abstand (29) zwischen den ein oder mehreren ersten Zonen (26) zwischen 5 µm und 500 µm, bevorzugt zwischen 10 µm und 300 µm, weiter bevorzugt zwischen 20 µm und 150 µm, beträgt und dass das Sicherheitselement (1) in den ein oder mehreren zweiten Zonen (27) die mindestens eine in ihrer optischen Wirkung elektrisch veränderbare Schicht (11) aufweist, und dass bevorzugt die ein oder mehreren ersten Zonen (26) gemäß einem eindimensionalen oder zweidimensionalen Raster angeordnet sind.

7. Sicherheitselement (1) nach dem vorangehenden Anspruch,
**dadurch gekennzeichnet,**
**dass** die ein oder mehreren ersten Zonen (26) musterförmig, insbesondere zur Darstellung einer ersten Information, ausgestaltet sind.

8. Sicherheitselement (1) nach einem der vorhergehen Ansprüche,
**dadurch gekennzeichnet,**
**dass** das Sicherheitselement (1) eine erste Elektrodenschicht (30) und eine zweite Elektrodenschicht (31) aufweist, zwischen denen zumindest ein Teil der mindestens einen in ihrer optischen Wirkung elektrisch veränderbaren Schicht (11) angeordnet ist, wobei bevorzugt die erste Elektrodenschicht (30) und/oder die zweite Elektrodenschicht (31) in einem ersten Bereich (36) vorgesehen ist und in einem zweiten Bereich (35) nicht vorgesehen ist, wobei der erste Bereich (36) musterförmig ausgestaltet ist, insbesondere zur Darstellung einer zweiten Information ausgestaltet ist.

9. Sicherheitselement (1) nach dem vorangehenden Anspruch,
**dadurch gekennzeichnet,**
**dass** die erste Elektrodenschicht (30) in zumindest einem dritten Bereich (37) erste Mikrostrukturen aufweist, wobei bevorzugt die ersten Mikrostrukturen erste diffraktive Reliefstrukturen und/oder binäre Mikrostrukturen sind, und/oder dass die zweite Elektrodenschicht (31) in zumindest einem vierten Bereich (33) zweite Mikrostrukturen aufweist, insbesondere zweite diffraktive Reliefstrukturen ausgewählt aus der Gruppe Kinegram® oder Hologramme, Beugungsstrukturen Nullter Ordnung, Blazegitter, insbesondere asymmetrische Sägezahn-Reliefstrukturen, Beugungsstrukturen, insbesondere lineare sinusförmige Beugungsgitter oder gekreuzte sinusförmige Beugungsgitter oder lineare ein- oder mehrstufige Rechteckgitter oder gekreuzte ein- oder mehrstufige Rechteckgitter, lichtbeugende und/oder lichtbrechende und/oder lichtfokussierende Mikro- oder Nanostrukturen, binäre oder kontinuierliche Fresnelllinsen, binäre oder kontinuierliche Fresnel-Freiformflächen, diffraktive oder refraktive Makrostrukturen, insbesondere Linsenstrukturen oder Mikroprismenstrukturen, Spiegelflächen, Mattstrukturen, insbesondere anisotrope oder isotrope Mattstrukturen oder Kombinationen dieser Strukturen, aufweist.

10. Sicherheitselement (1) nach einem der Ansprüche 1 bis 9,
**dadurch gekennzeichnet,**
**dass** die mindestens eine in ihrer optischen Wirkung elektrisch veränderbare Schicht (11) zwischen einer ersten Ausrichtungsschicht (50) mit einer ersten Vorzugsrichtung (53) und einer zweiten Ausrichtungsschicht (51) mit einer zweiten Vorzugsrichtung (54) angeordnet ist, wobei bevorzugt die erste Ausrichtungsschicht (50) und/oder die zweite Ausrichtungsschicht (51) eine dritte diffraktive Reliefstruktur aufweist, insbesondere eine Beugungsstruktur Nullter Ordnung aufweist.

11. Sicherheitselement (1) nach einem der vorhergehenden Ansprüche, **dadurch gekennzeichnet,**
**dass** das Sicherheitselement mindestens eine erste Polarisatorschicht (63) aufweist, wobei bevorzugt das Sicherheitselement eine zweite Polarisatorschicht (64) aufweist, wobei zwischen der mindestens einen ersten Polarisatorschicht (63) und der zweiten Polarisatorschicht (64) zumindest ein Teil der mindestens einen in ihrer optischen Wirkung elektrisch veränderbaren Schicht (11) angeordnet ist, und dass bevorzugt die mindestens eine erste Polarisatorschicht (63) und/oder die eine zweite Polarisatorschicht (64) eine Schicht aus semikristallinem Polymer ist.

12. Sicherheitselement (1) nach einem der vorhergehenden Ansprüche, **dadurch gekennzeichnet,**
**dass** das Sicherheitselement (1) mindestens eine Effektschicht (68) aufweist, welche das optische Erscheinungsbild des Sicherheitselements (1) beeinflusst, wobei bevorzugt die mindestens eine Effektschicht (68) eine optisch variable Schicht ist, insbesondere mindestens eine Farbschicht, welche ein Bindemittel und optisch variable Pigmente aufweist, ist.

13. Sicherheitsdokument (2), insbesondere eine Banknote oder ein ID-Dokument, mit mindestens einem Sicherheitselement (1) nach einem der Ansprüche 1 bis 12, wobei bevorzugt das Sicherheitselement (1) zumindest bereichsweise in einem transparenten Bereich des Sicherheitsdokuments (2) und/oder einem Fenster (71) des Sicherheitsdokuments (2) angeordnet ist.

14. Transferfolie (3) mit mindestens einem Sicherheitselement (1) nach einem der Ansprüche 1 bis 12, wobei das mindestens eine Sicherheitselement (1) auf einer Trägerfolie (73) der Transferfolie ablösbar angeordnet ist.

15. Verfahren zur Herstellung eines Sicherheitselements (1) nach einem der Ansprüche 1 bis 12, wobei das Sicherheitselement mindestens eine in ihrer optischen Wirkung elektrisch veränderbare Schicht (11) aufweist, wobei die mindestens eine in ihrer optischen Wirkung elektrisch veränderbare Schicht (11) durch Drucken, vorzugsweise auf eine Trägerfolie (73) oder auf einen auf eine Trägerfolie (73) aufgebrachte Schicht oder Schichtstapel, gebildet wird,
und wobei die mindestens eine in ihrer optischen Wirkung elektrisch veränderbare Schicht (11) in einem elektrischen Feld ausrichtbare Flüssigkristalle (12) aufweist, wobei
a) die mindestens eine in ihrer optischen Wirkung elektrisch veränderbare Schicht (11) weiter stäbchenförmige Farbstoffmoleküle (13) aufweist, und die Ausrichtungen der Längsachsen (14) der stäbchenförmigen Farbstoffmolekühle (13) in Abhängigkeit von den Ausrichtungen der Längsachsen (16) der räumlich benachbarten in dem elektrischen Feld ausrichtbaren Flüssigkristalle (12) veränderbar sind, und wobei die Konzentration der stäbchenförmigen Farbstoffmoleküle (13) in der mindestens einen in ihrer optischen Wirkung elektrisch veränderbaren Schicht (11) zwischen 0,05 Gewichtsprozent und 4 Gewichtsprozent, bevorzugt zwischen 0,15 Gewichtsprozent und 2,0 Gewichtsprozent, beträgt, und/oder
b) die in dem elektrischen Feld ausrichtbaren Flüssigkristalle (12) derart ausgebildet sind, dass die in dem elektrischen Feld ausrichtbaren Flüssigkristalle (12) gleichzeitig als Farbstoffmoleküle wirken,

## Claims

1. Security element (1) for identifying a security document (2), in particular a banknote or an ID document, having an upper side (10) and an underside (20), wherein the security element has at least one layer (11) which is electrically changeable in its optical effect,
wherein the at least one layer (11) which is electrically changeable in its optical effect has liquid crystals (12) which are adjustable in an electric field, wherein
a) the at least one layer (11) which is electrically changeable in its optical effect further has rod-shaped dye molecules (13), and the orientations of the longitudinal axes (14) of the rod-shaped dye molecules (13) are changeable depending on the orientations of the longitudinal axes (16) of the spatially adjacent liquid crystals (12) which are adjustable in the electric field, and wherein the concentration of the rod-shaped dye molecules (13) in the at least one layer (11) which is electrically changeable in its optical effect is between 0.05 weight percent and 4 weight percent, and/or
b) the liquid crystals (12) which are adjustable in an electric field are designed in such a way that the liquid crystals (12) which are adjustable in an electric field simultaneously act as dye molecules.

2. Security element (1) according to claim 1,
**characterised in that**
the orientation efficiency of the longitudinal axes (14) of the rod-shaped dye molecules (13) with respect to the longitudinal axes (16) of the liquid crystals (12) which are adjustable in the electric field is between 50% and 100%, preferably between 70% and 100%.

3. Security element (1) according to one of the preceding claims,
**characterised in that**
the rod-shaped dye molecules (13) are soluble, non-ionic, chemically, photochemically and/or electrochemically stable dye molecules and/or the rod-shaped dye molecules (13) are conjugated dye molecules, preferably conjugated, aromatic dye molecules.

4. Security element (1) according to one of the preceding claims,
**characterised in that**
the rod-shaped dye molecules (13) have at least one molecule based on an anthraquinone dye and/or an azo dye, and/or the concentration of the rod-shaped dye molecules (13) in the at least one layer (11) which is electrically changeable in its optical effect is between 0.15 weight percent and 2.0 weight percent, and/or the rod-shaped dye molecules (13) absorb light in a wavelength range which is visible to the human eye, preferably in a wavelength range of 380 nm to 780 nm, more preferably in a wavelength range of 430 nm to 690 nm, which impinges vertically on the longitudinal axis (14) of the rod-shaped dye molecule (13), more strongly than light which impinges parallel to the longitudinal axis (14) of the rod-shaped dye molecules (13).

5. Security element (1) according to one of the preceding claims,
**characterised in that**
the security element has a support layer (21), wherein preferably the support layer (21) at least partially forms a frame (22) around the at least one layer (11) which is electrically changeable in its optical effect, seen perpendicularly to the plane spanned by the underside (20) of the security element, said frame mechanically strengthening the at least one layer (11) which is electrically changeable in its optical effect, and preferably the frame (22) forms a visually recognisable design element.

6. Security element (1) according to the preceding claim,
**characterised in that**
the support layer (21) is present in one or several first zones (26) and is not present in one or several second zones (27), wherein the support layer (21) in the one or several first zones (26) has a height (28) between 1 µm and 50 µm, preferably between 2 µm and 30 µm, more preferably between 3 µm and 20 µm, wherein preferably the distance (29) between the one or several first zones (26) is between 5 µm and 500 µm, preferably between 10 µm and 300 µm, more preferably between 20 µm and 150 µm, and the security element (1) has the at least one layer (11) which is electrically changeable in its optical effect in the one or several second zones (27), and preferably the one or several first zones (26) are arranged according to a one-dimensional or two-dimensional grid.

7. Security element (1) according to the preceding claim,
**characterised in that**
the one or several first zones (26) are designed to be patterned, in particular to depict a first piece of information.

8. Security element (1) according to one of the preceding claims,
**characterised in that**
the security element (1) has a first electrode layer (30) and a second electrode layer (31), between which at least one part of the at least one layer (11) which is electrically changeable in its optical effect is arranged, wherein preferably the first electrode layer (30) and/or the second electrode layer (31) is provided in a first region (36) and is not provided in a second region (35), wherein the first region (36) is designed to be patterned, in particular designed to depict a second piece of information.

9. Security element (1) according to the preceding claim,
**characterised in that**
the first electrode layer (30) has first microstructures in at least one third region (37), wherein preferably the first microstructures are first diffractive relief structures and/or binary microstructures, and/or the second electrode layer (31) has second microstructures in at least a fourth region (33), in particular has two diffractive relief structures selected from the group Kinegram® or holograms, zeroth order diffractive structures, blazed gratings, in particular asymmetric sawtooth-relief structures, diffractive structures, in particular linear sinusoidal diffractive structures or crossed sinusoidal diffractive structures or linear one- or multi-stage rectangular grids or crossed one- or multi-stage rectangular grids, light-diffracting and/or light-refracting and/or light-focusing micro- or nanostructures, binary or continuous Fresnel lenses, binary or continuous Fresnel-freeform surfaces, diffractive or refractive macrostructures, in particular lens structures or microprism structures, mirror surfaces, matt structures, in particular anisotropic or isotropic matt structures or combinations of these structures.

10. Security element (1) according to one of claims 1 to 9,
**characterised in that**
the at least one layer (11) which is electrically changeable in its optical effect is arranged between a first alignment layer (50) having a first preferential direction (53) and a second alignment layer (51) having a second preferential direction (54), wherein preferably the first alignment layer (50) and/or the second alignment layer (51) has a third diffractive relief structure, in particular a zeroth order diffractive structure.

11. Security element (1) according to one of the preceding claims,
**characterised in that**
the security element has at least one first polariser layer (63), wherein preferably the security element has a second polariser layer (64), wherein between the at least one first polariser layer (63) and the second polariser layer (64) at least one part of the at least one layer (11) which is electrically changeable in its optical effect is arranged, and preferably the at least one first polariser layer (63) and/or the one second polariser layer (64) is a layer of semi-crystalline polymer.

12. Security element (1) according to one of the preceding claims,
**characterised in that**
the security element (1) has at least one effect layer (68), which influences the optical appearance of the security element (1), wherein preferably the at least one effect layer (68) is an optically variable layer, in particular is at least one colour layer, which has a binding agent and optically variable pigments.

13. Security document (2), in particular a banknote or an ID document, having at least one security element (1) according to one of claims 1 to 12, wherein preferably the security element (1) is arranged at least in regions in a transparent region of the security document (2) and/or a window (71) of the security document (2).

14. Transfer film (3) having at least one security element (1) according to one of claims 1 to 12, wherein the at least one security element (1) is detachably arranged on a carrier film (73) of the transfer film.

15. Method for manufacturing a security element (1) according to one of claims 1 to 12, wherein the security element has at least one layer (11) which is electrically changeable in its optical effect, wherein the at least one layer (11) which is electrically changeable in its optical effect is formed by printing, preferably onto a carrier film (73) or onto a layer or a layer stack applied onto a carrier film (73),
and wherein the at least one layer (11) which is electrically changeable in its optical effect has adjustable liquid crystals (12) in an electric field, wherein
a) the at least one layer (11) which is electrically changeable in its optical effect further has rod-shaped dye molecules (13), and the orientations of the longitudinal axes (14) of the rod-shaped dye molecules (13) are changeable depending on the orientations of the longitudinal axes (16) of the spatially adjacent liquid crystals (12) which are adjustable in the electric field, and wherein the concentration of the rod-shaped dye molecules (13) in the at least one layer (11) which is electrically changeable in its optical effect is between 0.05 weight percent and 4 weight percent, preferably between 0.15 weight percent and 2.0 weight percent, and/or
b) the liquid crystals (12) which are adjustable in the electric field are designed in such a way that the liquid crystals (12) which are adjustable in the electric field simultaneously act as dye molecules.

## Revendications

1. Elément de sécurité (1) servant à marquer un document de sécurité (2), en particulier un billet de banque ou un document d'identité, avec une face supérieure (10) et une face inférieure (20), dans lequel l'élément de sécurité présente au moins une couche (11) pouvant varier électriquement dans son effet optique,
dans lequel l'au moins une couche (11) pouvant varier électriquement dans son effet optique présente des cristaux liquides (12) pouvant être orientés dans un champ électrique, dans lequel
a) l'au moins une couche (11) pouvant varier électriquement dans son effet optique présente par ailleurs des molécules de colorant (13) en forme de petits bâtons et les orientations des axes longitudinaux (14) des molécules de colorant (13) en forme de petits bâtons peuvent varier en fonction des orientations des axes longitudinaux (16) des cristaux liquides (12) adjacents spatialement, pouvant être orientés dans le champ électrique, et dans lequel la concentration des molécules de colorant (13) en forme de petits bâtons dans l'au moins une couche (11) pouvant varier électriquement dans son effet optique est comprise entre 0,05 % en poids et 4 % en poids, et/ou
b) les cristaux liquides (12) pouvant être orientés dans le champ électrique sont réalisés de telle manière que les cristaux liquides (12) pouvant être orientés dans le champ électrique agissent simultanément en tant que molécules de colorant.

2. Elément de sécurité (1) selon la revendication 1,
**caractérisé en ce**
**que** l'efficacité d'orientation des axes longitudinaux (14) des molécules de colorant (13) en forme de petits bâtons par rapport aux axes longitudinaux (16) des cristaux liquides (12) pouvant être orientés dans le champ électrique est comprise entre 50 % et 100 %, de manière préférée entre 70 % et 100 %.

3. Elément de sécurité (1) selon l'une quelconque des revendications précédentes,
**caractérisé en ce**
**que** les molécules de colorant (13) en forme de petits bâtons sont des molécules de colorant solubles, non ioniques, stables chimiquement, photochimiquement et/ou électrochimiquement, et/ou que les molécules de colorant (13) en forme de petits bâtons sont des molécules de colorant conjuguées, de préférence des molécules de colorant conjuguées aromatiques.

4. Elément de sécurité (1) selon l'une quelconque des revendications précédentes
**caractérisé en ce**
**que** les molécules de colorant (13) en forme de petits bâtons présentent au moins une molécule à base d'un colorant d'anthraquinone et/ou d'un colorant azo, et/ou que la concentration des molécules de colorant (13) en forme de petits bâtons dans l'au moins une couche (11) pouvant varier électriquement dans son effet optique est comprise entre 0,15 % en poids et 2,0 % en poids, et/ou que les molécules de colorant (13) en forme de petits bâtons absorbent plus fortement de la lumière dans une plage de longueurs d'onde visible par l'œil humain, de manière préférée dans la plage de longueurs d'onde de 380 nm à 780 nm, de manière davantage préférée dans la plage de longueurs d'onde de 430 nm à 690 nm, laquelle est incidente de manière perpendiculaire sur l'axe longitudinal (14) des molécules de colorant (13) en forme de petits bâtons que la lumière, laquelle est incidente de manière parallèle par rapport à l'axe longitudinal (14) des molécules de colorant (13) en forme de petits bâtons.

5. Elément de sécurité (1) selon l'une quelconque des revendications précédentes,
**caractérisé en ce**
**que** l'élément de sécurité présente une couche d'appui (21), dans lequel de manière préférée la couche d'appui (21) forme, vue de manière perpendiculaire par rapport au plan formé par la face inférieure (20) de l'élément de sécurité, au moins en partie un cadre (22) autour de la couche (11) pouvant varier électriquement dans son effet optique, lequel renforce mécaniquement l'au moins une couche pouvant varier électriquement dans son effet optique, et de manière préférée le cadre (22) forme un élément esthétique pouvant être identifié visuellement.

6. Elément de sécurité (1) selon la revendication précédente,
**caractérisé en ce**
**que** la couche d'appui (21) est présente dans une ou plusieurs premières zones (26) et n'est pas présente dans une ou plusieurs deuxièmes zones (27), dans lequel la couche d'appui (21) présente dans l'une ou plusieurs premières zones (26) une hauteur (28) entre 1 µm et 50 µm, de manière préférée entre 2 µm et 30 µm, de manière davantage préférée entre 3 µm et 20 µm, dans lequel de manière préférée la distance (29) entre l'une ou plusieurs premières zones (26) est comprise entre 5 µm et 500 µm, de manière préférée entre 10 µm et 300 µm, de manière davantage préféré entre 20 µm et 150 µm, et que l'élément de sécurité (1) présente dans l'une ou plusieurs deuxièmes zones (27) l'au moins une couche (11) pouvant varier électriquement dans son effet optique, et que de manière préférée l'une ou plusieurs premières zones (26) sont disposées selon une trame monodimensionnelle ou bidimensionnelle.

7. Elément de sécurité (1) selon la revendication précédente,
**caractérisé en ce**
**que** l'une ou plusieurs premières zones (26) sont configurées en forme de motif, en particulier pour représenter une première information.

8. Elément de sécurité (1) selon l'une quelconque des revendications précédentes,
**caractérisé en ce**
**que** l'élément de sécurité (1) présente une première couche d'électrodes (30) et une deuxième couche d'électrodes (31), entre lesquelles au moins une partie de l'au moins une couche (11) pouvant varier électriquement dans son effet est disposée, dans lequel de manière préférée la première couche d'électrodes (30) et/ou la deuxième couche d'électrodes (31) sont prévues dans une première zone (36) et ne sont pas prévues dans une deuxième zone (35), dans lequel la première zone (36) est configurée de manière à présenter une forme de motif, en particulier est configurée pour représenter une deuxième information.

9. Elément de sécurité (1) selon la revendication précédente,
**caractérisé en ce**
**que** la première couche d'électrodes (30) présente dans au moins une troisième zone (37) des premières microstructures, dans lequel de manière préférée les premières microstructures sont des premières structures en relief diffractives et/ou des premières microstructures binaires, et/ou que la deuxième couche d'électrodes (31) présente dans au moins une quatrième zone (33) des deuxièmes microstructures, en particulier des deuxièmes structures en relief diffractives choisies parmi le groupe des Kinegram® ou des hologrammes, des structures de diffraction de rang zéro, des réseaux blaze, en particulier de structures en relief à dents de scie asymétriques, des structures de diffraction, en particulier des réseaux de diffraction sinusoïdaux linéaires ou des réseaux de diffraction sinusoïdaux croisés ou des réseaux rectangulaires à un ou à plusieurs paliers linéaires ou des réseaux rectangulaires à un ou à plusieurs paliers croisés, des micro- ou nanostructures de diffraction de la lumière et/ou de réfraction de la lumière et/ou de concentration de la lumière, des lentilles de Fresnel binaires ou continues, des surfaces à forme libre de Fresnel binaires ou continues, des macrostructures diffractives ou réfractives, en particulier des structures de lentille ou de structures à micro-prismes, des surfaces réfléchissantes, des structures mattes, en particulier des structures mattes anisotropes ou isotropes ou des combinaisons desdites structures.

10. Elément de sécurité (1) selon l'une quelconque des revendications 1 à 9,
**caractérisé en ce**
**que** l'au moins une couche (11) pouvant varier électriquement dans son effet optique est disposée entre une première couche d'orientation (50) avec une première direction de prédilection (53) et une deuxième direction d'orientation (51) avec une deuxième direction de prédilection (54), dans lequel de manière préférée la première couche d'orientation (50) et/ou la deuxième couche d'orientation (51) présentent une troisième structure en relief diffractive, en particulier une structure de diffraction de rang zéro.

11. Elément de sécurité (1) selon l'une quelconque des revendications précédentes,
**caractérisé en ce**
**que** l'élément de sécurité présente au moins une première couche de polarisateur (63), dans lequel de manière préférée l'élément de sécurité présente une deuxième couche de polarisateur (64), dans lequel au moins une partie de l'au moins une couche (11) pouvant varier électriquement dans son effet optique est disposée entre l'au moins une première couche de polarisateur (63) et la deuxième couche de polarisateur (64), et que de manière préférée l'au moins une première couche de polarisateur (63) et/ou une deuxième couche de polarisateur (64) est une couche en polymère semi-cristallin.

12. Elément de sécurité (1) selon l'une quelconque des revendications précédentes,
**caractérisé en ce**
**que** l'élément de sécurité (1) présente au moins une couche à effet (68), laquelle influe sur l'aspect optique de l'élément de sécurité (1), dans lequel de manière préférée l'au moins une couche à effet (68) est une couche optiquement variable, en particulier au moins une couche colorée, laquelle présente un liant ou des pigments optiquement variables.

13. Document de sécurité (2), en particulier billet de banque ou document d'identité, avec au moins un élément de sécurité (1) selon l'une quelconque des revendications 1 à 12, dans lequel de manière préférée l'élément de sécurité (1) est disposé au moins par endroits dans une zone transparente du document de sécurité (2) et/ou dans une fenêtre (71) du document de sécurité (2).

14. Film de transfert (3) avec au moins un élément de sécurité (1) selon l'une quelconque des revendications 1 à 12, dans lequel l'au moins un élément de sécurité (1) est disposé de manière à pouvoir être retiré sur un film de support (73) du film de transfert.

15. Procédé servant à fabriquer un élément de sécurité (1) selon l'une quelconque des revendications 1 à 12, dans lequel l'élément de sécurité présente au moins une couche (11) pouvant varier électriquement dans son effet optique, dans lequel l'au moins une couche (11) pouvant varier électriquement dans son effet optique est formée par impression de préférence sur un film de support (73) ou sur une couche ou un empilement de couches installée ou installé sur un film de support (73),
et dans lequel l'au moins une couche (11) pouvant varier électriquement dans son effet optique présente des cristaux liquides (12) pouvant être orientés dans un champ électrique, dans lequel
a) l'au moins une couche (11) pouvant varier électriquement dans son effet optique présente par ailleurs des molécules de colorant (13) en forme de petits bâtons, et les orientations des axes longitudinaux (14) des molécules de colorant (13) en forme de petits bâtons peuvent varier en fonction des orientations des axes longitudinaux (16) des cristaux liquides (12) adjacents spatialement, pouvant être orientés dans le champ électrique, et dans lequel la concentration des molécules de colorant (13) en forme de petits bâtons dans l'au moins une couche (11) pouvant varier électriquement dans son effet optique est comprise entre 0,05 % en poids et 4 % en poids, de manière préférée entre 0,15 % en poids et 2,0 % en poids, et/ou
b) les cristaux liquides (12) pouvant être orientés dans le champ électrique sont réalisés de telle manière que les cristaux liquides (12) pouvant être orientés dans le champ électrique agissent dans le même temps en tant que molécules de colorant.
